# EUROPEAN PATENT APPLICATION

(11) **EP 4 704 459 A1**
(43) Date of publication of application: **04.03.2026**
(21) Application number: 23934504.4
(22) Date of filing: 26.04.2023
(51) Int. Cl.: H04W 24/02

(54) **COMMUNICATION METHOD, TERMINAL, NETWORK ELEMENT, CORE NETWORK DEVICE, AND STORAGE MEDIUM**

(71) Applicant: Beijing Xiaomi Mobile Software Co., Ltd., Beijing 100085 (CN)
(72) Inventor: SUN, Yuze, Beijing 100085 (CN); CHEN, Dong, Beijing 100085 (CN)
(74) Representative: Dehns Germany Partnerschaft mbB
(86) International application number: PCT/CN2023/090979
(87) International publication number: WO 2024/221302

(57) **Abstract**

Embodiments of the present disclosure relate to the field of communications, and provide a communication method, a terminal, a network element, a core network device, and a storage medium. The method comprises: sending a first request, wherein the first request is used for requesting a core network device to provide a sensing service to a terminal, the first request comprises first information, and the first information is used for indicating a sensing service required by the terminal; and in response to acquiring a second request, determining and sending first sensing measurement data, wherein the second request is used for instructing the terminal to determine the first sensing measurement data, and the first sensing measurement data is sensing measurement data related to the sensing service on a terminal side. The embodiments of the present disclosure realize ordered distribution and execution of the task of determining the sensing measurement data.

## Description

### TECHNICAL FIELD

The present disclosure relates to the technical field of communication, and in particular, to a communication method, a terminal, a network element, a core network device, a communication device and a storage medium.

### BACKGROUND

Wireless sensing technology is widely used in scenarios where information about remote objects is obtained because it does not require physical contact. In the technical field of communication, communication-based auxiliary sensing technology can further improve the performance of communication systems, such as beam management and interference mitigation. In addition, it can also be used in many application scenarios such as environmental monitoring, autonomous driving, and intrusion monitoring.

### SUMMARY

The embodiments of the present disclosure provide a communication method, a network element, a terminal, a core network device, a communication device and a storage medium, which can solve the above-mentioned problems of the related art. The technical solutions are as follows.

According to a first aspect of the embodiments of the present disclosure, a communication method is provided, the method being performed by a terminal, and including:
sending a first request, where the first request is used to request a core network device to provide a sensing service to the terminal, the first request includes first information, and the first information is used to indicate a sensing service required by the terminal; and
in response to obtaining a second request, the second request being used to instruct the terminal to determine first sensing measurement data, and the first sensing measurement data being sensing measurement data related to a sensing service on a terminal side, determining and sending the first sensing measurement data.

According to a second aspect of the embodiments of the present disclosure, a communication method is provided, the method being performed by a core network device, and including:
in response to obtaining a first request, the first request being used to request the core network device to provide a sensing service to a terminal, the first request including first information, and the first information being used to indicate a sensing service required by the terminal, sending a second request, where the second request is used to instruct the terminal to determine first sensing measurement data, and the first sensing measurement data is sensing measurement data related to a sensing service on a terminal side;
determining second sensing measurement data, where the second sensing measurement data is sensing measurement data related to a sensing service on a core network device side; and
in response to obtaining the first sensing measurement data, determining a sensing result of the sensing service according to the first sensing measurement data and the second sensing measurement data.

According to a third aspect of the embodiments of the present disclosure, a communication method is provided, the method being performed by an AMF network element, and including:
in response to obtaining a first request, sending a third request to a first network element of a core network device;
where the first request is used to request the core network device to provide a sensing service to a terminal, the first request includes first information, and the first information is used to indicate a sensing service required by the terminal;
the third request is used to request the first network element to communicate with the terminal through the AMF network element, and the third request includes the first information;
the first network element is used to indicate first sensing measurement data and second sensing measurement data required for providing the sensing service, the first sensing measurement data is sensing measurement data related to a sensing service on a terminal side, and the second sensing measurement data is sensing measurement data related to a sensing service on a core network device side.

According to a fourth aspect of the embodiments of the present disclosure, a communication method is provided, the method is performed by a first network element, and including:
in response to obtaining a third request, sending a second request to a terminal, and sending a fourth request to a second network element;
where the third request is used to request the first network element to communicate with the terminal through an AMF network element, the third request includes first information, and the first information is used to indicate a sensing service required by the terminal;
the second request is used to instruct the terminal to determine first sensing measurement data, and the first sensing measurement data is sensing measurement data related to a sensing service on a terminal side.

The fourth request is used to instruct the second network element to determine second sensing measurement data.

According to a fifth aspect of the embodiments of the present disclosure, a communication method is provided, the method being performed by a second network element, and including:
in response to obtaining a fourth request, the fourth request being used to instruct to determine second sensing measurement data, and the second sensing measurement data being sensing measurement data related to a sensing service required by a terminal on a core network device side, and determining the second sensing measurement data;
where the fourth request is sent by a first network element in response to obtaining a third request, the third request is used to request a first network element to communicate with the terminal through an AMF network element of the core network device, the third request includes first information, and the first information is used to indicate the sensing service;
the first network element is used to indicate first sensing measurement data and second sensing measurement data required for providing the sensing service, and the first sensing measurement data is sensing measurement data related to a sensing service required by the terminal on a terminal side.

According to a sixth aspect of the embodiments of the present disclosure, a communication method is provided, the method being performed by a third network element, and including:
in response to obtaining a fifth request, first sensing measurement data, and second sensing measurement data, determining a sensing result of a sensing service required by a terminal according to the sensing service, the first sensing measurement data, and the second sensing measurement data;
where the fifth request includes first information, the first information is used to indicate the sensing service required by the terminal, and the fifth request is used to instruct to determine the sensing result of the sensing service;
the first sensing measurement data is sensing measurement data related to a sensing service on a terminal side; the second sensing measurement data is sensing measurement data related to a sensing service on a core network device side.

According to a seventh aspect of the embodiments of the present disclosure, a communication method is provided, the method being performed by a fourth network element, and including:
in response to obtaining a sensing result of a sensing service required by a terminal, outputting the sensing result;
where the sensing result is determined by a third network element in the core network device in response to obtaining a fifth request, first sensing measurement data, and second sensing measurement data;
the fifth request includes first information, the first information is used to indicate a sensing service, and the fifth request is used to instruct to determine the sensing result of the sensing service;
the first sensing measurement data is sensing measurement data related to a sensing service on a terminal side; the second sensing measurement data is sensing measurement data related to a sensing service on a core network device side.

According to an eighth aspect of the embodiments of the present disclosure, there is provided a communication method, including:
an AMF network element receiving a first request sent by a terminal, where the first request is used to request a core network device to provide a sensing service to the terminal, the first request includes first information, and the first information is used to indicate a sensing service required by the terminal;
in response to obtaining the first request, the AMF network element sending a third request to a first network element, where the third request is used to request the first network element to communicate with the terminal through the AMF network element, and the third request includes the first information;
in response to obtaining the third request, the first network element sending a second request to the terminal and sending a fourth request to a second network element, where the second request is used to instruct the terminal to determine first sensing measurement data, the first sensing measurement data being sensing measurement data related to a sensing service on a terminal side, and determine and send the first sensing measurement data; the fourth request is used to instruct the second network element to determine second sensing measurement data, and the second sensing measurement data being sensing measurement data related to the sensing service on a core network device side;
in response to obtaining the second request, the terminal determining the first sensing measurement data, and sending the first sensing measurement data to the second network element;
in response to obtaining the fourth request, the second network element determining the second sensing measurement data, and the second network element sending second information to the first network element, where the second information is used to indicate that the first sensing measurement data has been received and the second sensing measurement data has been determined;
in response to obtaining the second information, the first network element sending a fifth request to the third network element through the second network element, where the fifth request includes the first information, the first information is used to indicate the sensing service required by the terminal, and the fifth request is used to instruct the third network element of the core network device to determine the sensing result of the sensing service;
the second network element sending the first sensing measurement data and the second sensing measurement data to the third network element;
in response to obtaining the fifth request, the first sensing measurement data, and the second sensing measurement data, the third network element determining a sensing result of the sensing service required by the terminal according to the sensing service, the first sensing measurement data, and the second sensing measurement data;
the third network element sending a first sensing result related to the terminal side to the terminal, and sending a second sensing result related to the core network device side to the fourth network element; and
in response to obtaining the second sensing result, the fourth network element outputting the second sensing result.

According to a ninth aspect of the embodiments of the present disclosure, a terminal is provided, including:
a sensing request module, configured to send a first request, where the first request is used to request a core network device to provide a sensing service to the terminal, the first request includes first information, and the first information is used to indicate a sensing service required by the terminal; and
a data sending module, configured to, in response to obtaining a second request, the second request being used to instruct the terminal to determine first sensing measurement data, and the first sensing measurement data being sensing measurement data related to a sensing service a terminal side, determine and send the first sensing measurement data.

According to a tenth aspect of the embodiments of the present disclosure, an AMF network element is provided, including:
an association request module, configured to, in response to obtaining a first request, send a third request to a first network element of a core network device;
where the first request is used to request the core network device to provide a sensing service to a terminal, the first request includes first information, and the first information is used to indicate a sensing service required by the terminal;
the third request is used to request the first network element to communicate with the terminal through the AMF network element, and the third request includes the first information;
the first network element is used to indicate first sensing measurement data and second sensing measurement data required for providing the sensing service, the first sensing measurement data is sensing measurement data related to a sensing service on a terminal side, and the second sensing measurement data is sensing measurement data related to a sensing service on a core network device side.

According to an eleventh aspect of the embodiments of the present disclosure, a first network element is provided, including:
a collection instruction module, configured to, in response to obtaining a third request, send a second request to a terminal and send a fourth request to a second network element;
where the third request is used to request the first network element to communicate with the terminal through an AMF network element, the third request includes first information, and the first information is used to indicate a sensing service required by the terminal;
the second request is used to instruct the terminal to determine first sensing measurement data, and the first sensing measurement data is sensing measurement data related to a sensing service on a terminal side.

The fourth request is used to instruct the second network element to determine second sensing measurement data.

According to a twelfth aspect of the embodiments of the present disclosure, a second network element is provided, including:
a sensing data determination module, configured to, in response to obtaining a fourth request, the fourth request being used to instruct to determine second sensing measurement data, and the second sensing measurement data being sensing measurement data related to a sensing service required by a terminal on a core network device side, determine the second sensing measurement data;
where the fourth request is sent by a first network element in response to obtaining a third request, the third request is used to request the first network element to communicate with the terminal through an AMF network element of the core network device, the third request includes first information, and the first information is used to indicate the sensing service;
the first network element is used to indicate first sensing measurement data and the second sensing measurement data required for providing the sensing service, and the first sensing measurement data is sensing measurement data related to a sensing service required by the terminal on a terminal side.

According to a thirteenth aspect of the embodiments of the present disclosure, a third network element is provided, including:
a result calculation module, configured to, in response to obtaining a fifth request, first sensing measurement data, and second sensing measurement data, determine a sensing result of a sensing service required by a terminal according to the sensing service, the first sensing measurement data, and the second sensing measurement data;
where the fifth request includes first information, the first information is used to indicate the sensing service required by the terminal, and the fifth request is used to instruct to determine the sensing result of the sensing service;
the first sensing measurement data is sensing measurement data related to a sensing service on a terminal side; the second sensing measurement data is sensing measurement data related to a sensing service on a core network device side.

According to a fourteenth aspect of the embodiments of the present disclosure, a fourth network element is provided, including:
an output module, configured to, in response to obtaining a sensing result of a sensing service required by a terminal, output the sensing result;
where the sensing result is determined by a third network element in a core network device in response to obtaining a fifth request, first sensing measurement data, and second sensing measurement data;
the fifth request includes first information, the first information is used to indicate the sensing service, and the fifth request is used to instruct to determine the sensing result of the sensing service;
the first sensing measurement data is sensing measurement data related to a sensing service on a terminal side; the second sensing measurement data is sensing measurement data related to a sensing service on a core network device side.

According to a fifteenth aspect of the embodiments of the present disclosure, there is provided a communication system, including:
an AMF network element that performs the communication method of the third aspect;
a first network element that performs the communication method of the fourth aspect;
a second network element that performs the communication method of the fifth aspect;
a third network element that performs the communication method of the sixth aspect;
a fourth network element that performs the communication method of the seventh aspect.

According to a sixteenth aspect of the present disclosure, a core network device is provided, including:
a data indication module, configured to, in response to obtaining a first request, the first request being used to request a core network device to provide a sensing service to a terminal, the first request including first information, and the first information being used to indicate a sensing service required by the terminal, send a second request, where the second request is used to instruct the terminal to determine first sensing measurement data, and the first sensing measurement data is sensing measurement data related to a sensing service on a terminal side;
a sensing measurement module, configured to determine second sensing measurement data, where the second sensing measurement data is sensing measurement data related to a sensing service on a core network device side; and
a result determination module, configured to, in response to obtaining the first sensing measurement data, determine a sensing result of the sensing service according to the first sensing measurement data and the second sensing measurement data.

According to the seventeenth aspect of the embodiments of the present disclosure, a storage medium is provided, which, when an instruction is executed on a communication device, enables the communication device to perform the communication method of any one of the first aspect, the second aspect, the third aspect, the fourth aspect, the fifth aspect, the sixth aspect, and the seventh aspect.

According to the eighteenth aspect of the embodiments of the present disclosure, a communication system is provided, which is used to perform the method as described in any one of the second aspect, the third aspect, the fourth aspect, the fifth aspect, the sixth aspect, and the seventh aspect.

The technical solutions provided by the embodiments of the present disclosure have the following beneficial effects.

The terminal sends a first request to the AMF network element of the core network device to request the core network device to provide the sensing service to the terminal, and the first request includes first information for indicating the sensing service required by the terminal, which lays the foundation for the core network device to determine which sensing measurement data are required for providing the sensing service. The terminal receives the second request sent by the core network device. The terminal only needs to collect the sensing measurement data related to the sensing service on the terminal side, and does not need to collect the sensing measurement data related to the sensing service on the non-terminal side, such as the core network side, thereby realizing the orderly allocation and execution of the task of determining the sensing measurement data.

### BRIEF DESCRIPTION OF THE DRAWINGS

In order to more clearly illustrate the technical solutions in the embodiments of the present disclosure, the drawings required for describing the embodiments of the present disclosure are briefly introduced below.
FIG. 1a is a schematic diagram of an architecture of a communication system shown in an embodiment of the present disclosure;
FIG. 1b is an input-output separation structure applied to a 6G network according to an embodiment of the present disclosure;
FIG. 2 is an interactive schematic diagram of a communication method provided in an embodiment of the present disclosure;
FIG. 3a is a schematic diagram of a process of a communication method performed by a terminal according to an embodiment of the present disclosure;
FIG. 3b is a schematic diagram of a process of a communication method performed by a terminal provided in an embodiment of the present disclosure;
FIG. 4a is a schematic diagram of a process in a communication method performed by a core network device provided in an embodiment of the present disclosure;
FIG. 4b is a schematic diagram of a process in a communication method performed by an AMF network element provided in an embodiment of the present disclosure;
FIG. 4c is a schematic diagram of a process in a communication method performed by an AMF network element provided in an embodiment of the present disclosure;
FIG. 4d is a schematic diagram of a process in a communication method performed by a first network element provided in an embodiment of the present disclosure;
FIG. 4e is a schematic diagram of a process in a communication method performed by a first network element provided in an embodiment of the present disclosure;
FIG. 4f is a schematic diagram of a process in a communication method performed by a second network element provided in an embodiment of the present disclosure;
FIG. 4g is a schematic diagram of a process in a communication method performed by a second network element provided in an embodiment of the present disclosure;
FIG. 4h is a schematic diagram of a process in a communication method performed by a third network element provided in an embodiment of the present disclosure;
FIG. 4i is a schematic diagram of a process in a communication method performed by a third network element provided in an embodiment of the present disclosure;
FIG. 4j is a schematic diagram of a process in a communication method performed by a fourth network element provided in an embodiment of the present disclosure;
FIG. 5a is an interactive schematic diagram of a communication method according to an embodiment of the present disclosure;
FIG. 5b is a schematic diagram of a process of a communication method according to an embodiment of the present disclosure;
FIG. 6 is a schematic diagram of a structure of a terminal provided in an embodiment of the present disclosure;
FIG. 7a is a schematic diagram of a structure of an AMF network element provided in an embodiment of the present disclosure;
FIG. 7b is a schematic diagram of a structure of a first network element provided in an embodiment of the present disclosure;
FIG. 7c is a schematic diagram of a structure of a second network element provided in an embodiment of the present disclosure;
FIG. 7d is a schematic diagram of a structure of a third network element provided in an embodiment of the present disclosure;
FIG. 7e is a schematic diagram of a structure of a fourth network element provided in an embodiment of the present disclosure;
FIG. 7f is a schematic diagram of a structure of a core network device provided in an embodiment of the present disclosure;
FIG. 7g is a schematic diagram of a structure of a communication system provided by an embodiment of the present disclosure;
FIG. 8 is a schematic diagram of a structure of a communication device provided in an embodiment of the present disclosure.

### DETAILED DESCRIPTION

The embodiments of the present disclosure provide a communication method, a terminal, a network element, a core network device, and a storage medium.

In a first aspect, an embodiment of the present disclosure provides a communication method, which is performed by a terminal, and the method includes:
sending a first request, where the first request is used to request a core network device to provide a sensing service to the terminal, the first request includes first information, and the first information is used to indicate a sensing service required by the terminal; and
in response to obtaining a second request, the second request being used to instruct the terminal to determine first sensing measurement data, and the first sensing measurement data being sensing measurement data related to the sensing service on the terminal side, determining and sending the first sensing measurement data.

In the above embodiment, the terminal requests the core network device to provide the sensing service to the terminal by sending a first request, and the first request includes first information for indicating the sensing service required by the terminal, which lays the foundation for the core network device to determine which sensing measurement data are required for providing the service. The terminal receives the second request sent by the core network device. The terminal only needs to collect the sensing measurement data related to the sensing service on the terminal side, and does not need to collect the sensing measurement data related to the sensing service on the non-terminal side, such as the core network side, thereby realizing the orderly allocation and execution of the task of determining the sensing measurement data.

In conjunction with some embodiments of the first aspect, in some embodiments, the method further includes:
receiving a sensing result of the sensing service, where the sensing result is determined according to first sensing measurement data and second sensing measurement data, the second sensing measurement data is determined by the core network device, and the second sensing measurement data is sensing measurement data related to the sensing service on the core network device side.

In the above embodiment, the two types of sensing measurement data in the embodiment of the present disclosure are sensing measurement data on the terminal side and sensing measurement data on the core network device side. Since the network element(s) and the environment on the core network device side contain a lot of useful information, the sensing result determined based on the two types of sensing measurement data is more accurate. The terminal also receives the sensing result of the sensing service. The sensing result is obtained according to the two types of sensing measurement data on the terminal and the core network device side, and the sensing result is more accurate.

In combination with some embodiments of the first aspect, in some embodiments, the sensing result includes at least one of a first sensing result related to the terminal side and a second sensing result related to the core network device side.

In the above embodiment, the sensing result includes at least one of the first sensing result related to the terminal side and the second sensing result related to the core network device, so that the user of the terminal can be informed of the sensing result of at least one side.

In combination with some embodiments of the first aspect, in some embodiments, at least one of the following includes a service identifier associated with the terminal:
the second request, the first sensing measurement data, and the second sensing measurement data.

By including a service identifier associated with the terminal in the second request, the first sensing measurement data, and the second sensing measurement data, the core network device can effectively distinguish when providing the sensing service to multiple terminals.

In a second aspect, an embodiment of the present disclosure provides a communication method, which is performed by a core network device, and the method includes:
in response to obtaining a first request, the first request being used to request the core network device to provide a sensing service to a terminal, the first request including first information, and the first information being used to indicate a sensing service required by the terminal, sending a second request, where the second request is used to instruct the terminal to determine first sensing measurement data, and the first sensing measurement data is sensing measurement data related to the sensing service on the terminal side;
determining second sensing measurement data, where the second sensing measurement data is sensing measurement data related to the sensing service on the core network device side; and
in response to obtaining the first sensing measurement data, determining a sensing result of the sensing service according to the first sensing measurement data and the second sensing measurement data.

In the above embodiment, the core network device receives the first request to provide a sensing service to the terminal, and the first request includes first information for indicating the sensing service required by the terminal, which lays a foundation for the core network device to determine which sensing measurement data are needed to provide the service. The core network device sends the second request to instruct the terminal to return the first sensing measurement data. The two types of sensing measurement data in the embodiment of the present disclosure are sensing measurement data on the terminal side and sensing measurement data on the core network device side. Since the network element(s) and the environment on the core network device side contain a lot of useful information, the sensing result determined based on the two types of sensing measurement data is more accurate.

In conjunction with some embodiments of the second aspect, in some embodiments, the method further includes:
sending the sensing result of the sensing service.

In the above embodiment, the sensing result is sent to the terminal so that the terminal can obtain the sensing result.

In conjunction with some embodiments of the second aspect, in some embodiments, the method further includes that:
the sensing result includes at least one of a first sensing result related to the terminal side and a second sensing result related to the core network device side.

In a third aspect, an embodiment of the present disclosure proposes a communication method, which is performed by an AMF network element, and the method includes:
in response to obtaining a first request, sending a third request to a first network element of a core network device;
where the first request is used to request the core network device to provide a sensing service to the terminal, the first request includes first information, and the first information is used to indicate the sensing service required by the terminal;
the third request is used to request the first network element to communicate with the terminal through the AMF network element, and the third request includes the first information;
the first network element is used to indicate first sensing measurement data and second sensing measurement data required for providing the sensing service, the first sensing measurement data is sensing measurement data related to the sensing service on the terminal side, and the second sensing measurement data is sensing measurement data related to the sensing service on the core network device side.

In the above embodiment, the AMF network element receives a first request sent by the terminal, the first request is used to request the core network device to provide a sensing service to the terminal, the first request includes first information, and the first information is used to indicate the sensing service required by the terminal. The AMF network element sends a third request to the first network element, requesting the first network element to communicate with the terminal through the AMF network element, to establish an association between the terminal and the first network element at the first network element. The first network element is used to indicate the first sensing measurement data and the second sensing measurement data required for providing the sensing service. The first network element is also a network element used to schedule each network element to provide the sensing service to the terminal.

In conjunction with some embodiments of the third aspect, in some embodiments, the method further includes:
in response to obtaining the second request, sending the second request to the terminal;
where the second request is used to instruct the terminal to determine first sensing measurement data, and the first sensing measurement data is sensing measurement data related to the sensing service on the terminal side.

In the above embodiment, the AMF network element is also used to forward the second request of the first network element to the terminal, so as to enable the core network device to transmit data to the terminal.

In conjunction with some embodiments of the second aspect, in some embodiments, at least one of the following includes a service identifier associated with the terminal:
the second request, the first sensing measurement data, and the second sensing measurement data.

By including the service identifier associated with the terminal in the second request, the first sensing measurement data, and the second sensing measurement data, the core network device can effectively distinguish when providing the sensing service to multiple terminals.

In a fourth aspect, an embodiment of the present disclosure provides a communication method, which is performed by a first network element, and the method includes:
in response to obtaining a third request, sending a second request to the terminal, and sending a fourth request to the second network element;
where the third request is used to request the first network element to communicate with the terminal through the AMF network element, the third request includes first information, and the first information is used to indicate the sensing service required by the terminal;
the second request is used to instruct the terminal to determine first sensing measurement data, where the first sensing measurement data is sensing measurement data related to the sensing service on the terminal side.

The fourth request is used to instruct the second network element to determine second sensing measurement data.

In the above embodiment, by receiving the third request sent by the AMF network element, the third request being used to request the first network element to communicate with the terminal through the AMF network element, and the third request also including the first information for indicating the sensing service required by the terminal, the first network element also instructs the second network element to determine second sensing measurement data according to the sensing service required by the terminal, laying a foundation for subsequent determination of the sensing result. The first network element instructs the terminal and the second network element of the core network device to obtain the sensing measurement data of the terminal side and the core network device side respectively, laying a foundation for subsequent acquisition of more accurate sensing results.

In conjunction with some embodiments of the fourth aspect, in some embodiments, the method further includes:
in response to the second network element obtaining the first sensing measurement data and the second sensing measurement data, sending a fifth request to a third network element of the core network device;
where the fifth request includes the first information, and the fifth request is used to instruct the third network element to determine the sensing result of the sensing service.

In the above embodiment, the first network element sends a fifth request to the third network element used to determine the sensing result of the sensing service in response to the second network element obtaining the first sensing measurement data and the second sensing measurement data. The embodiment of the present disclosure realizes the decoupling of obtaining the sensing measurement data and determining the sensing result of the sensing service.

In combination with some embodiments of the fourth aspect, in some embodiments, the sensing result includes at least one of a first sensing result related to the terminal side and a second sensing result related to the core network device side.

In the above embodiment, the sensing result in the present disclosure includes the sensing results related to the terminal side and the core network device side, which realizes multi-dimensional determination of the sensing result and also lays the foundation for adjusting the network service on the core network device side.

In conjunction with some embodiments of the fourth aspect, in some embodiments, at least one of the following includes a service identifier associated with the terminal:
the second request, the first sensing measurement data, the second sensing measurement data, and the fifth request.

By including the service identifier associated with the terminal in the second request, the first sensing measurement data, the second sensing measurement data and the fifth request, a foundation is laid for the core network device to provide the targeted sensing service when providing sensing services to multiple terminals.

In a fifth aspect, an embodiment of the present disclosure provides a communication method, which is performed by a second network element, and the method includes:
in response to obtaining a fourth request, the fourth request being used to instruct to determine second sensing measurement data, and the second sensing measurement data being sensing measurement data related to the sensing service required by the terminal on the core network device side, determining the second sensing measurement data;
where the fourth request is sent by the first network element in response to obtaining the third request, where the third request is used to request the first network element to communicate with the terminal through the AMF network element of the core network device, the third request includes first information, and the first information is used to indicate the sensing service;
the first network element is used to indicate first sensing measurement data and second sensing measurement data required for providing the sensing service, and the first sensing measurement data is sensing measurement data related to the sensing service required by the terminal on the terminal side.

In the above embodiment, the second network element is used to receive the fourth request sent by the first network element of the core network device to determine the second sensing measurement data, laying a foundation for subsequently obtaining more accurate sensing results.

In conjunction with some embodiments of the fourth aspect, in some embodiments, the method further includes:
receiving first sensing measurement data, where the first sensing measurement data is sensing measurement data related to the sensing service on the terminal side;
sending the first sensing measurement data and the second sensing measurement data to a third network element of the core network device;
where the third network element is used to determine the sensing result of the sensing service according to the first sensing measurement data and the second sensing measurement data.

In the above embodiment, the second network element receives the first sensing measurement data, sends the first sensing measurement data and the second sensing measurement data to the third network element of the core network device, and the third network element determines the sensing result, thereby achieving decoupling of obtaining the sensing measurement data and determining the sensing result.

In conjunction with some embodiments of the fifth aspect, in some embodiments, the method further includes:
sending second information to the first network element, where the second information is used to indicate that the first sensing measurement data has been received and the second sensing measurement data has been determined;
in response to obtaining a fifth request, sending the fifth request to the third network element;
where the fifth request includes first information, the first information is used to indicate the sensing service required by the terminal, and the fifth request is used to instruct the third network element of the core network device to determine the sensing result of the sensing service.

In the above embodiment, when the second network element has received the first sensing measurement data and determined the second sensing measurement data, it may send second information to the first network element. The first network element forwards the fifth request to the third network element through the second network element in response to the second information, at this time, the third network element knows to determine the sensing result.

In conjunction with some embodiments of the fifth aspect, in some embodiments, at least one of the following includes a service identifier associated with the terminal:
the fourth request, the first sensing measurement data, the second sensing measurement data, and the fifth request.

In the above embodiment, by including the service identifier associated with the terminal in the fourth request, the fifth request, the first sensing measurement data, and the second sensing measurement data, when the core network device provides sensing services to multiple terminals, the sensing measurement data of each terminal can be received in an orderly manner.

In combination with some embodiments of the fifth aspect, in some embodiments, the sensing result includes at least one of a first sensing result related to the terminal side and a second sensing result related to the core network device side.

In a sixth aspect, an embodiment of the present disclosure proposes a communication method, which is performed by a third network element, and the method includes:
in response to obtaining the fifth request, the first sensing measurement data, and the second sensing measurement data, determining a sensing result of the sensing service required by the terminal according to the sensing service, the first sensing measurement data, and the second sensing measurement data;
where the fifth request includes first information, the first information is used to indicate a sensing service required by the terminal, and the fifth request is used to indicate to determine the sensing result of the sensing service;
the first sensing measurement data is the sensing measurement data related to the sensing service on the terminal side; the second sensing measurement data is the sensing measurement data related to the sensing service on the core network device side.

In the above embodiment, the third network element receives the first sensing measurement data and the second sensing measurement data, thereby achieving the effect of obtaining a more accurate sensing result by utilizing the sensing measurement data on the terminal side and the core network device side.

In conjunction with some embodiments of the sixth aspect, in some embodiments, the method further includes:
sending the sensing result to at least one of the terminal and the fourth network element of the core network device;
where the fourth network element is used to output the sensing result.

In combination with some embodiments of the sixth aspect, in some embodiments, the sensing result includes at least one of a first sensing result related to the terminal side and a second sensing result related to the core network device side.

In conjunction with some embodiments of the sixth aspect, in some embodiments, at least one of the following includes a service identifier associated with the terminal:
the first sensing measurement data, the second sensing measurement data, and the fifth request.

In a seventh aspect, an embodiment of the present disclosure proposes a communication method, which is performed by a fourth network element in a core network device, and the method includes:
in response to obtaining a sensing result of the sensing service required by the terminal, outputting the sensing result;
where the sensing result is determined by a third network element in the core network device in response to obtaining the fifth request, the first sensing measurement data, and the second sensing measurement data;
the fifth request includes first information, the first information is used to indicate a sensing service, and the fifth request is used to instruct to determine a sensing result of the sensing service;
the first sensing measurement data is the sensing measurement data related to the sensing service on the terminal side; the second sensing measurement data is the sensing measurement data related to the sensing service on the core network device side.

In the above embodiment, the fourth network element is used to output the sensing result, thereby realizing the decoupling of inputting the sensing measurement data, determining the sensing result and outputting the sensing result in the core network device.

In conjunction with some embodiments of the seventh aspect, in some embodiments, at least one of the following includes a service identifier associated with the terminal:
the first sensing measurement data, the second sensing measurement data, and the fifth request.

In combination with some embodiments of the seventh aspect, in some embodiments, the sensing result includes at least one of a first sensing result related to the terminal side and a second sensing result related to the core network device side.

In an eighth aspect, an embodiment of the present disclosure provides a communication method, including:
the AMF network element receiving a first request sent by the terminal, where the first request is used to request the core network device to provide a sensing service to the terminal, the first request includes first information, and the first information is used to indicate the sensing service required by the terminal;
in response to obtaining the first request, the AMF network element sending a third request to the first network element, where the third request is used to request the first network element to communicate with the terminal through the AMF network element, and the third request includes the first information;
in response to obtaining the third request, the first network element sending a second request to the terminal and sending a fourth request to the second network element, where the second request is used to instruct the terminal to determine first sensing measurement data, the first sensing measurement data being sensing measurement data related to the sensing service on the terminal side, and determine and send the first sensing measurement data; the fourth request is used to instruct the second network element to determine second sensing measurement data, the second sensing measurement data being sensing measurement data related to the sensing service on the core network device side,
in response to obtaining the second request, the terminal determining the first sensing measurement data, and sending the first sensing measurement data to the second network element;
in response to obtaining the fourth request, the second network element determining the second sensing measurement data, and the second network element sending second information to the first network element, where the second information is used to indicate that the first sensing measurement data has been received and the second sensing measurement data has been determined;
in response to obtaining the second information, the first network element sending a fifth request to the third network element through the second network element, where the fifth request includes the first information, the first information is used to indicate the sensing service required by the terminal, and the fifth request is used to instruct the third network element of the core network device to determine a sensing result of the sensing service;
the second network element sending the first sensing measurement data and the second sensing measurement data to the third network element;
in response to obtaining the fifth request, the first sensing measurement data, and the second sensing measurement data, the third network element determining the sensing result of the sensing service required by the terminal according to the sensing service, the first sensing measurement data, and the second sensing measurement data;
the third network element sending a first sensing result related to the terminal side to the terminal, and sending a second sensing result related to the core network device side to the fourth network element;
the fourth network element outputting the second sensing result in response to obtaining the second sensing result.

In a ninth aspect, an embodiment of the present disclosure provides a terminal, including:
a sensing request module, configured to send a first request, where the first request is used to request the core network device to provide a sensing service to the terminal, the first request includes first information, and the first information is used to indicate the sensing service required by the terminal; and
a data sending module, configured to, in response to obtaining a second request, the second request being used to instruct the terminal to determine first sensing measurement data, and the first sensing measurement data being sensing measurement data related to the sensing service on the terminal side, determining and sending the first sensing measurement data.

In a tenth aspect, an embodiment of the present disclosure proposes an AMF network element, including:
an association request module, configured to send a third request to a first network element of a core network device in response to obtaining the first request;
where the first request is used to request the core network device to provide a sensing service to the terminal, the first request includes first information, and the first information is used to indicate the sensing service required by the terminal;
the third request is used to request the first network element to communicate with the terminal through the AMF network element, and the third request includes the first information;
the first network element is used to indicate first sensing measurement data and second sensing measurement data required for providing the sensing service, the first sensing measurement data is sensing measurement data related to the sensing service on the terminal side, and the second sensing measurement data is sensing measurement data related to the sensing service on the core network device side.

In an eleventh aspect, an embodiment of the present disclosure provides a first network element, including:
a collection instruction module, configured to send a second request to the terminal and send a fourth request to the second network element in response to obtaining the third request;
where the third request is used to request the first network element to communicate with the terminal through the AMF network element, the third request includes first information, and the first information is used to indicate the sensing service required by the terminal;
the second request is used to instruct the terminal to determine first sensing measurement data, where the first sensing measurement data is sensing measurement data related to the sensing service on the terminal side;
the fourth request is used to instruct the second network element to determine second sensing measurement data, where the second sensing measurement data is sensing measurement data related to the sensing service on the core network device side.

In a twelfth aspect, an embodiment of the present disclosure provides a second network element, including:
a sensing data determination module, configured to, in response to obtaining a fourth request, the fourth request being used to instruct to determine second sensing measurement data, and the second sensing measurement data being sensing measurement data related to a sensing service required by a terminal on a core network device side, determine the second sensing measurement data;
where the fourth request is sent by the first network element in response to obtaining the third request, the third request is used to request the first network element to communicate with the terminal through the AMF network element of the core network device, the third request includes first information, and the first information is used to indicate the sensing service;
the first network element is used to indicate first sensing measurement data and second sensing measurement data required for providing a sensing service, where the first sensing measurement data is sensing measurement data on the terminal side related to the sensing service required by the terminal.

In a thirteenth aspect, an embodiment of the present disclosure proposes a third network element, including:
in response to obtaining the fifth request, the first sensing measurement data, and the second sensing measurement data, determining a sensing result of the sensing service required by the terminal according to the sensing service, the first sensing measurement data, and the second sensing measurement data;
where the fifth request includes first information, the first information is used to indicate a sensing service required by the terminal, and the fifth request is used to indicate to determine the sensing result of the sensing service;
the first sensing measurement data is the sensing measurement data related to the sensing service on the terminal side; the second sensing measurement data is the sensing measurement data related to the sensing service on the core network device side.

In a fourteenth aspect, an embodiment of the present disclosure proposes a fourth network element, including:
an output module, configured to, in response to obtaining a sensing result of the sensing service required by the terminal, output the sensing result;
where the sensing result is determined by the third network element in the core network device in response to obtaining the fifth request, the first sensing measurement data, and the second sensing measurement data;
the fifth request includes first information, the first information is used to indicate a sensing service, and the fifth request is used to instruct to determine the sensing result of the sensing service;
the first sensing measurement data is the sensing measurement data related to the sensing service on the terminal side; the second sensing measurement data is the sensing measurement data related to the sensing service on the core network device side.

In a fifteenth aspect, an embodiment of the present disclosure provides a communication system, including:
an AMF network element that performs the communication method of the third aspect;
a first network element that performs the communication method of the fourth aspect;
a second network element that performs the communication method of the fifth aspect;
a third network element that performs the communication method of the sixth aspect;
a fourth network element that performs the communication method of the seventh aspect.

In a sixteenth aspect, a core network device is provided, including:
a data indication module, configured to, in response to obtaining a first request, the first request being used to request a core network device to provide a sensing service to a terminal, the first request including first information, and the first information being used to indicate the sensing service required by the terminal, send a second request, where the second request is used to instruct the terminal to determine first sensing measurement data, and the first sensing measurement data is sensing measurement data related to the sensing service on the terminal side;
a sensing measurement module, configured to determine second sensing measurement data, where the second sensing measurement data is sensing measurement data related to the sensing service on the core network device side; and
a result determination module, configured to, in response to obtaining the first sensing measurement data, determine a sensing result of the sensing service according to the first sensing measurement data and the second sensing measurement data.

In the seventeenth aspect, an embodiment of the present disclosure proposes a storage medium, which, when the instruction is executed on a communication device, enables the communication device to perform any one of the communication methods of the first aspect, the second aspect, the third aspect, the fourth aspect, and the fifth aspect.

In some embodiments, terms such as communication method and information processing method can be replaced with each other, terms such as communication device and information processing apparatus, communication apparatus can be replaced with each other, and terms such as information processing system and communication system can be replaced with each other.

The embodiments of the present disclosure are not exhaustive, but are merely illustrative of some embodiments, and are not intended to be a specific limitation on the scope of protection of the embodiments of the present disclosure. In the case of no contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementation methods in a certain embodiment can be arbitrarily combined. In addition, the embodiments can be arbitrarily combined. For example, part or all of the steps of different embodiments can be arbitrarily combined, and a certain embodiment can be arbitrarily combined with the optional implementation methods of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the embodiments of the present disclosure.

In the embodiments of the present disclosure, unless otherwise specified, elements expressed in the singular form, such as "a", "an", "the", "above-mentioned", "said", "this", etc., may mean "one and only one", or "one or more", "at least one", etc. For example, when using articles such as "a", "an", "the" in English in translation, the noun after the article may be understood as a singular expression or a plural expression.

In the embodiments of the present disclosure, "multiple (plurality)" refers to two or more. In some embodiments, the terms "at least one of", "a plurality of", "multiple", etc. can be used interchangeably.

In the embodiments of the present disclosure, descriptions such as "at least one of A, B, C...", "A and/or B and/or C...", etc. include the situation where any one of A, B, C... exists alone, and also include the situation where any multiple of A, B, C... are arbitrarily combined, and each situation can exist alone; for example, "at least one of A, B, C" includes the situations where A exists alone, B exists alone, C exists alone, the combination of A and B, the combination of A and C, the combination of B and C, and the combination of A, B and C; for example, A and/or B includes the situations where A exists alone, B exists alone, and the combination of A and B.

In some embodiments, the description methods such as "in one case, A, in another case, B", "in response to one case, A, in response to another case, B", etc. may include the following technical solutions according to the situation: A is executed independently of B, that is, in some embodiments, A; B is executed independently of A, that is, in some embodiments, B; A and B are selectively executed, that is, selecting from A and B to execute in some embodiments; A and B are both executed, that is, A and B in some embodiments. When there are more branches such as A, B, C, etc., it is similar to the above.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first apparatus" as an example, the number of "apparatus" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first configuration" and the "second configuration" may be the same information or different information, and their contents may be the same or different.

In some embodiments, "including (comprising) A", "containing A", "used to indicate A", and "carrying A" can be interpreted as directly carrying A or indirectly indicating A.

In some embodiments, terms such as "in response to...", "in response to determining...", "in the case of...", "at the time of...", "when...", "if...", "in a case that...", etc. can be used interchangeably.

In some embodiments, the terms "greater than", "greater than or equal to", "not less than", "more than", "more than or equal to", "not less than", "higher than", "higher than or equal to", "not less than", "above" and the like can be used interchangeably, and the terms "less than", "less than or equal to", "not greater than", "less than", "less than or equal to", "no more than", "lower than", "lower than or equal to", "not higher than", "below" and the like can be used interchangeably.

In some embodiments, apparatuses, etc. can be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" can be used interchangeably.

In some embodiments, the terms "access network device (AN device), "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and so on can be used interchangeably.

In some embodiments, the term "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and so on can be used interchangeably.

In some embodiments, the access network device, the core network device, or the network device can be replaced by a terminal. For example, the various embodiments of the embodiments of the present disclosure can also be applied to a structure in which the communication between the access network device, the core network device, or the network device and the terminal is replaced by communication between multiple terminals (for example, it can also be called device-to-device (D2D), vehicle-to-everything (V2X), etc.). In this case, it can also be set as a structure in which the terminal has all or part of the functions of the access network device. In addition, languages such as "uplink" and "downlink" can also be replaced by languages corresponding to communication between terminals (for example, "side").

For example, an uplink channel, a downlink channel, etc. may be replaced by a sidelink channel, and an uplink, a downlink, etc. may be replaced by a sidelink.

In some embodiments, the terminal may be replaced by an access network device, a core network device, or a network device. In this case, it can also be set as a structure in which the access network device, the core network device, or the network device has all or part of the functions of the terminal.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "code element (symbol)", "codebook", "codeword", "codepoint", "bit", "data", "program", and "chip" can be used interchangeably.

In some embodiments, terms such as "uplink", "up link", "physical uplink" can be interchangeable, and terms such as "downlink", "down link", "physical downlink" can be interchangeable, and terms such as "side", "sidelink", "side communication", "sidelink communication", "direct connection", "direct link", "direct communication", "direct link communication" can be interchangeable.

In some embodiments, the terms "downlink control information (DCI)", "downlink (DL) assignment", "DL DCI", "uplink (UL) grant", "UL DCI" and so on can be used interchangeably.

In some embodiments, the terms "physical downlink shared channel (PDSCH)", "DL data" and the like can be interchangeable with each other, and the terms "physical uplink shared channel (PUSCH)", "UL data" and the like can be interchangeable with each other.

In some embodiments, the terms "radio", "wireless", "radio access network (RAN)", "access network (AN)", "RAN-based" and the like may be used interchangeably.

In some embodiments, the terms "search space", "search space set", "search space configuration", "search space set configuration", "control resource set (CORESET)", "CORESET configuration" and so on can be used interchangeably.

In some embodiments, terms such as "synchronization signal (SS)", "synchronization signal block (SSB)", "reference signal (RS)", "pilot", and "pilot signal" can be used interchangeably.

In some embodiments, terms such as "moment", "time point", "time", and "time position" can be interchangeable, and terms such as "duration", "time period", "time window", "window", and "time" can be interchangeable.

In some embodiments, terms such as "component carrier (CC)", "cell", "frequency carrier", and "carrier frequency" can be used interchangeably.

In some embodiments, "resource block (RB)", "physical resource block (PRB)", "sub-carrier group (SCG)", "resource element group (REG)", "PRB pair", "RB pair", "resource element (RE)", etc. may be used interchangeably.

In some embodiments, terms such as wireless access scheme and waveform may be used interchangeably.

In some embodiments, the terms "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like are interchangeable.

In some embodiments, the terms "frame", "radio frame", "subframe", "slot", "sub-slot", "mini-slot", "symbol", "code element (symbol)", "transmission time interval (TTI)" and so on can be used interchangeably.

In some embodiments, "obtain", "acquire", "get", "receive", "transmit", "bidirectional transmission", "send and/or receive" can be interchangeable, and can be interpreted as receiving from other entities, obtaining from a protocol, obtaining by self-processing, autonomous implementation, etc.

In some embodiments, terms such as "send", "emit", "report", "deliver", "transmit", "bidirectional transmission", "send and/or receive" can be used interchangeably.

In some embodiments, "predetermined" or "preset" may be interpreted as being pre-specified in a protocol, etc., or may be interpreted as a pre-set action performed by an apparatus, etc.

In some embodiments, determining can be interpreted as discerning, deciding, judging, calculating, computing, processing, deriving, investigating, seeking, looking up, search, inquiry, ascertaining, receiving, transmitting, input, output, accessing, resolving, selecting, choosing, establishing, comparing, "assuming," "expecting," "considering," broadcasting, notifying, communicating, forwarding, configuring, reconfiguring, allocating, mapping, assigning, and the like, but is not limited thereto.

In some embodiments, the determining or judging can be performed by a value represented by 1 bit (0 or 1), by a true or false value (Boolean value) represented by true or false, or by comparison of numerical values (for example, comparison with a predetermined value), but is not limited thereto.

In some embodiments, "network" may be interpreted as an apparatus included in the network (e.g., access network device, core network device, etc.).

In some embodiments, "not expecting to receive" can be interpreted as not receiving on time domain resources and/or frequency domain resources, or as not performing subsequent processing on the data after receiving the data; "not expecting to send" can be interpreted as not sending, or as sending but not expecting the recipient to respond to the sent content.

In some embodiments, "existing", "stored", and "saved" may be interchangeable.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, and any columns may also be implemented as an independent embodiment.

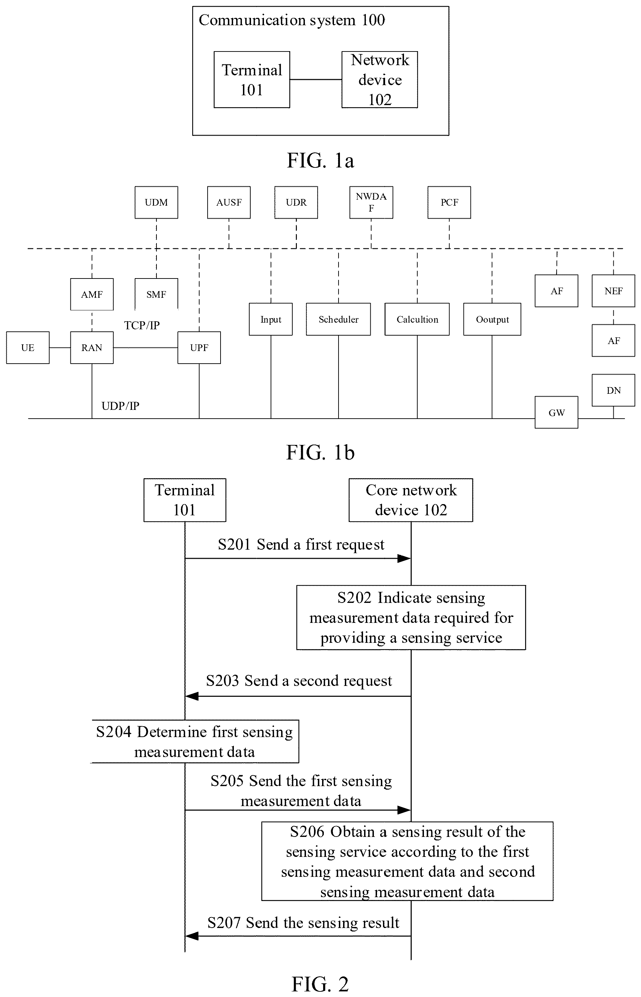

FIG. 1a is a schematic diagram showing the architecture of a communication system according to an embodiment of the present disclosure.

As shown in FIG. 1a, a communication system 100 includes a terminal 101 and a network device 102.

In some embodiments, the terminal 101 includes at least one of, for example, a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited to thereto.

In some embodiments, the network device 102 may include a core network device. The core network device may be a device including one or more network elements, or may be multiple devices or device groups, each including all or part of the one or more network elements. The network element may be virtual or physical. The core network may include, for example, at least one of an Evolved Packet Core (EPC), a 5G Core Network (5GCN), and a Next Generation Core (NGC).

It can be understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. A person of ordinary skill in the art can know that with the evolution of the system architecture and the emergence of new service scenarios, the technical solutions proposed in the embodiments of the present disclosure are also applicable to similar technical problems.

The following embodiments of the present disclosure may be applied to the communication system 100 shown in FIG. 1a, or part of the subject, but are not limited thereto. The subjects shown in FIG. 1a are examples, and the communication system may include all or part of the subjects in FIG. 1a, or may include other subjects other than FIG. 1a, and the number and form of the subjects are arbitrary, and the connection relationship between the subjects is an example, and the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), 5th generation mobile communication system (5G), 5G new radio (NR), future radio access (FRA), new-radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) Things, IoT) system, vehicle-to-everything (V2X), systems using other communication methods, and next-generation systems based on them. In addition, multiple systems can also be combined (for example, a combination of LTE or LTE-A and 5G, etc.) for application.

Referring to FIG. 1b, FIG. 1b exemplarily shows the input-output separation structure of the embodiment of the present disclosure applied to the 6G network. As shown in the figure, an input functional network element and an output functional network element are added in the network structure on the basis of the 5GS network architecture for obtaining and feedback of information within the network.

The overall architecture is divided into two parts. The dotted line part is the control plane, and the solid line part is the data plane. The control plane is used for signaling interaction between network elements, and the data plane is used for the transmission of sensing measurement data and sensing results.

The control plane mainly involves at least one of the following:
Access and Mobility Management Function (AMF);
Session Management Function (SMF);
Unified Data Management (UDM)
Authentication Server Function (AUSF);
User Data Repository (UDR);
Network Data Analytics Function (NWDAF);
Network Repository Function (NRF);
Policy Control Function (PCF);
Application Function (AF)
Network Exposure Function (NEF);
the data plane involves at least one of the following:
User plane function network element (User Plane Function, UPF);
Gateway (GW);
Data Network (DN).

In addition, the core network device of the embodiments of the present disclosure is added with a first network element (Scheduler network element in the figure) for scheduling and allocating sensing tasks, and a third network element (Calculation network element in the figure) is added in the network to analyze and calculate the sensing strategy data by using network computing resources, and transmit the sensing results to the fourth network element (Output network element in the figure). The UE side also has an input function module, and terminal entities such as mobile phones and smart cars capture position information, road condition information, and vehicle driving information through antennas, cameras and other devices. The remaining network elements are all original network elements in 5GS.

The second network element (Input network element in the figure) functional entity of the core network equipment includes a network traffic monitor, a network sensor, a temperature sensor, a network camera and other devices, which can obtain real-time changes in network information, such as abnormal network congestion, abnormal server temperature, etc., and can also obtain real-time monitoring information through the camera. It is very meaningful to obtain such network information in a timely manner and influence other network elements.

The first network element can make judgments and analyses according to the input information, and is responsible for signaling scheduling and task allocation between the UE and the third network element.

The third network element can schedule computing resources (such as GPU\CPU, etc.) to process the input information, remove redundant content therein, pre-process, calculate and reason the useful parts, and generate instructions of the next step according to the result.

The fourth network element includes a display screen, a switch, etc. For example, when the network identifies that the temperature of the server is too high, the fourth network element is notified to respond accordingly, such as turning on the air conditioner and increasing power of the radiator; when smoke or fire is found in the computer room, the fire extinguishing equipment is activated.

FIG. 2 is an interactive schematic diagram of a communication method shown in an embodiment of the present disclosure. As shown in the figure, the embodiment of the present disclosure relates to a communication method, which is used in the communication system 100. The method includes the following steps.

In S201, the terminal 101 sends a first request to the core network device 102.

In some embodiments, the terminal 101 sends a first request to the core network device 102 through the Radio Access Network (RAN).

In some embodiments, the core network device 102 receives the first request.

In some embodiments, the name of the first request is not limited, and it may be, for example, "sensing service request", "sensing information service request", etc.

In some embodiments, the first request is used to request the core network device to provide a sensing service to the terminal.

In some embodiments, the sensing service refers to a service that performs motion detection, gesture recognition, and biometric measurement based on communication signals. Through the implementation of the sensing service, more intelligent and richer applications can be provided in the fields of smart home, smart transportation, intrusion detection, medical care, remote care, etc.

In some embodiments, the first request includes first information.

In some embodiments, the name of the first information is not limited, and it may be, for example, "sensing service demand information".

In some embodiments, the first information is used to indicate the sensing service required by the terminal.

In some embodiments, the first information is description information of the sensing service required by the terminal.

In some embodiments, the first information is used to indicate at least one of the following: type information of the sensing service; information of the sensing object; sensing amount information of the sensing object; purpose or application use information of the sensing service; granularity information of the sensing service; and execution time information of the sensing service.

In some embodiments, the first request includes terminal information, and the terminal information may include at least one of the following: user permanent identifier (SUbs cription Permanent Identifier, SUPI), data network name (DNN), Generic Public Subscription Identifier (GPSI), geographic location information, and access type.

In S202, the core network device indicates sensing measurement data required for providing the sensing service.

In some embodiments, the core network device receives the first request.

In some embodiments, the core network device performs task allocation for the sensing service. The task allocation refers to: determining the steps to be performed by each network element of the core network device for the sensing service required by the terminal.

In some embodiments, the network elements of the core network device include at least one of the following: an AMF network element, a first network element, a second network element, a third network element, and a fourth network element.

In some embodiments, the name of the first network element is not limited, and may be, for example, a "policy network element".

In some embodiments, the first network element can make judgments and analyses according to the third request, and is responsible for signaling scheduling and task allocation among the terminal, the second network element, the third network element, and the fourth network element.

In some embodiments, the name of the second network element is not limited, for example, it may be "input network element", "data input network element", etc.

In some embodiments, the second network element can determine the second sensing measurement data, receive the first sensing measurement data determined by the terminal, aggregate the first sensing measurement data and the second sensing measurement data, and send the aggregated data to the third network element.

In some embodiments, the name of the third network element is not limited, and may be, for example, a "computing network element".

In some embodiments, the third network element can schedule computing resources (such as GPU\CPU, etc.) to process the received sensing measurement data, such as removing redundant content, preprocessing, calculating and reasoning useful content, and generating instructions of the next step according to the result.

In some embodiments, the name of the fourth network element is not limited, and may be, for example, "output network element" or "result output network element".

In some embodiments, the fourth network element can output feedback according to the sensing result.

In some embodiments, the first network element, the second network element, the third network element and the fourth network element may be the same network element or different network elements.

In some embodiments, the AMF network element receives a first request sent by the terminal 101.

In some embodiments, the AMF network element sends a third request to the first network element in response to receiving the first request.

In some embodiments, the name of the third request is not limited, and it is, for example, a "terminal policy association request."

In some embodiments, the third request is used to request the first network element to communicate with the terminal through the AMF network element.

In some embodiments, the third request is used to create an association relationship between the terminal and the first network element to allow the first network element to send data to the terminal through the AMF network element.

In some embodiments, the third request includes the first information.

In some embodiments, the first network element receives the third request.

In some embodiments, the first network element determines to communicate with the terminal through the AMF network element in response to obtaining the third request.

In some embodiments, the first network element performs task allocation for the sensing service in response to receiving the third request.

In some embodiments, the first network element determines the sensing measurement data required for providing the sensing service according to the sensing service required by the terminal.

In some embodiments, the measurement data required for providing the sensing service includes first sensing measurement data to be determined by the terminal and second sensing measurement data to be determined by the core network device.

In some embodiments, the first sensing measurement data refers to sensing measurement data related to the sensing service on the terminal side.

In some embodiments, such as in a smart traffic scenario, the sensing measurement data related to the sensing service on the terminal side includes at least one of the following:

position information, speed information, road condition information, temperature information, and environmental image.

In some embodiments, the second sensing measurement data refers to sensing measurement data related to the sensing service on the core network device side.

In some embodiments, the sensing measurement data related to the sensing service on the core network device side includes at least one of the following:
network transmission performance, service temperature, and image of the environment where the server is located.

In some embodiments, the core network device may determine second sensing measurement data in step S202.

In some embodiments, the core network device may determine the second sensing measurement data after obtaining the first sensing measurement data.

In some embodiments, the second network element has (or is connected to) at least one of a network traffic detector, a network sensor, a temperature sensor, and a camera, and is capable of determining real-time changes in network information, so the second network element determines the second sensing measurement data.

In some embodiments, the second network element can obtain real-time images at the core network device through a camera, and the real-time images can more realistically display the environment where the core network device is located. For example, when there is fire or smoke in the computer room, the environment where the core network device is located can be determined more accurately and timely than based only on the temperature sensor or the smoke sensor, and better sensing services can be provided.

In some embodiments, the first network element sends a fourth request to the second network element.

In some embodiments, the fourth request is used to instruct the second network element to determine the second sensing measurement data.

In some embodiments, the name of the fourth request is not limited, for example, it may be a "network sensing information input request".

In some embodiments, the second network element determines the second sensing measurement data in response to receiving the fourth request.

In some embodiments, the fourth request includes a service identifier associated with the terminal, so that the second network element places the service identifier in the second sensing measurement data when determining the second sensing measurement data. That is, the second sensing measurement data includes the service identifier associated with the terminal.

In S203, a second request is sent to the terminal.

In some embodiments, the terminal receives the second request.

In some embodiments, the name of the second request is not limited, and it may be, for example, a "sensing information input request."

In some embodiments, the first network element sends the second request to the terminal through the AMF network element.

In some embodiments, the first network element sends a second request to the AMF, the AMF sends the second request to the RAN, and the RAN sends the second request to the terminal.

In some embodiments, the second request is used to indicate at least one of the following:
determining the first sensing measurement data;
sending the determined first sensing measurement data to a second network element of the core network device.

In some embodiments, the second request includes at least one of:
information for indicating required first sensing measurement data;
the service identifier associated with the terminal;
address information of the second network element to enable the terminal to send the first sensing measurement data to the second network element.

In some embodiments, the first network element determines the service identifier associated with the terminal according to the terminal information, and associates the sensing measurement data and the sensing result related to the current sensing service through the service identifier. For example, the terminal can send the service identifier at the same time when sending the first sensing measurement data to the core network device, so that when the core network device obtains the first sensing measurement data sent by multiple terminals (each first sensing measurement data is the sensing measurement data of the terminal side for the sensing service required by the corresponding terminal), it determines the sensing service required by which terminal each first sensing measurement data corresponds to.

In S204, the terminal determines the first sensing measurement data.

In some embodiments, the terminal has the ability to sense the network status and the environment where it is located.

In some embodiments, the terminal has at least one of an image acquisition sensor, a positioning sensor, and a network traffic monitor.

In some embodiments, taking the smart traffic scenario as an example, the first sensing measurement data may include orientation information, speed information, road condition information, temperature information, and an image of the environment.

In S205, the terminal sends the first sensing measurement data to the core network device.

In some embodiments, the core network device receives the first sensing measurement data.

In some embodiments, the second network element of the core network device receives the first sensing measurement data.

In some embodiments, the first sensing measurement data includes a service identifier associated with the terminal.

In S206, the core network device obtains a sensing result of the sensing service according to the first sensing measurement data and the second sensing measurement data.

In some embodiments, the core network device may determine the second sensing measurement data in step S202, or may determine the second sensing measurement data in step S206.

In some embodiments, the terminal determines the first sensing measurement data and sends it to the second network element, the second network element determines the second sensing measurement data, the second network element sends the second sensing measurement data determined by itself and the first sensing measurement data sent by the terminal to a third network element, and the third network element obtains a sensing result of the sensing service according to the first sensing measurement data and the second sensing measurement data.

In some embodiments, the second network element aggregates and organizes the first sensing measurement data and the second sensing measurement data including the same service identifier, and sends the aggregated sensing measurement data to the third network element.

In some embodiments, the second network element sends the first sensing measurement data and the second sensing measurement data to the third network element via the user plane.

In some embodiments, the first network element sends a fifth request to the third network element, where the fifth request is used to indicate to determine the sensing result of the sensing service.

In some embodiments, the third network element determines a sensing result of the sensing service in response to receiving the fifth request.

In some embodiments, the name of the fifth request is not limited, for example, it may be a "computation request".

In some embodiments, the fifth request includes the first information.

In some embodiments, the third network element performs certain data processing (such as data analysis, etc.) according to the sensing service required by the terminal and in combination with the first sensing measurement data and the second sensing measurement data to obtain a sensing result.

In some embodiments, the sensing result includes at least one of the following:
a first sensing result related to the terminal;
a second sensing result related to the core network device.

The embodiments of the present disclosure can obtain sensing results in two aspects and realize comprehensive result feedback.

In S207, the core network device sends the sensing result of the sensing service to the terminal.

In some embodiments, the third network element sends the sensing result to at least one of the terminal and the fourth network element through the user plane.

In some embodiments, the third network element sends the first sensing result related to the terminal to the terminal.

In some embodiments, the third network element sends the second sensing result related to the core network device to the fourth network element.

In some embodiments, the fourth network element includes a display screen, a control switch, etc. For example, when the sensing result is that the server temperature is too high, the fourth network element makes a corresponding response, such as turning on the air conditioner and increasing the radiator power; when smoke or fire is found in the computer room, the fourth network element activates the fire extinguishing equipment.

The communication method involved in the embodiments of the present disclosure may include at least one of steps S201 to S207. For example, step S201 may be implemented as a separate embodiment, step S202 may be implemented as a separate embodiment, step S203 may be implemented as a separate embodiment, step S204 may be implemented as a separate embodiment, step S205 may be implemented as a separate embodiment, step S206 may be implemented as a separate embodiment, and step S207 may be implemented as a separate embodiment, but is not limited thereto.

In some embodiments, step S202 and step S203 may be executed in an exchanged order or simultaneously.

In some embodiments, step S202 and step S203 may be executed in an exchanged order or simultaneously.

In some embodiments, steps S202 to S207 are optional, and one or more of these steps may be omitted or replaced in different embodiments.

In some embodiments, step S201 and steps S203 to S207 are optional, and one or more of these steps may be omitted or replaced in different embodiments.

In some embodiments, step S201, step S202, and step S204 to step S207 are optional, and one or more of these steps may be omitted or replaced in different embodiments.

In some embodiments, steps S201 to S203 and steps S205 to S207 are optional, and one or more of these steps may be omitted or replaced in different embodiments.

In some embodiments, steps S201 to S204 and step S207 are optional, and one or more of these steps may be omitted or replaced in different embodiments.

In some embodiments, steps S201 to S206 are optional, and one or more of these steps may be omitted or replaced in different embodiments.

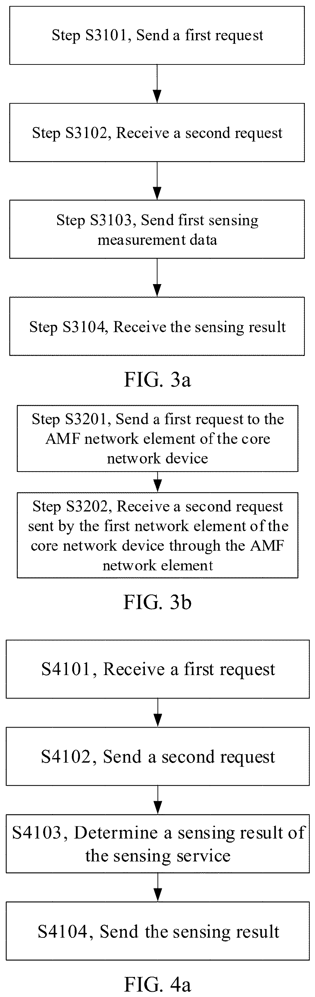

FIG. 3a is a flowchart of a communication method according to an embodiment of the present disclosure. As shown in FIG. 3a, the communication method involved in the embodiment of the present disclosure is executed by the terminal 101. The method includes the following steps.

In step S3101, a first request is sent.

The optional implementation of step S3101 can refer to the optional implementation of step S201 in FIG. 2, as well as other related parts in the embodiment involved in FIG. 2, which will not be repeated here.

In some embodiments, the terminal 101 may send the first request to the core network device 102, but is not limited thereto and may also send the first request to other entities.

Optionally, the first request may be used by the core network device 102 to determine the sensing measurement data required for providing the sensing service.

In some embodiments, the AMF network element of the core network device 102 receives the first request.

In step S3102, a second request is received.

The optional implementation of step S3102 can refer to the optional implementation of step S203 in FIG. 2, as well as other related parts in the embodiment involved in FIG. 2, which will not be described in detail here.

In some embodiments, the terminal 101 may receive a second request sent by an AMF network element of a core network device.

In some embodiments, step S3102 is omitted, and the terminal 101 autonomously implements the function indicated by the second request, or the above function is default or acquiescent.

In step S3103, first sensing measurement data is sent.

The optional implementation of step S3103 can refer to the optional implementation of step S204 and step S205 in FIG. 2, as well as other related parts in the embodiment involved in FIG. 2, which will not be repeated here.

In some embodiments, the terminal 101 may send the first sensing measurement data to the second network element of the core network device 102.

In step S3104, the sensing result is received.

The optional implementation of step S3104 can refer to the optional implementation of step S207 in FIG. 2, as well as other related parts in the embodiment involved in FIG. 2, which will not be described in detail here.

In some embodiments, the terminal 101 may receive a sensing result sent by a third network element of a core network device, but is not limited thereto and may also receive a sensing result sent by other entities.

In some embodiments, steps S3103 and S3104 are optional, and one or more of these steps may be omitted or replaced in different embodiments.

In some embodiments, steps S3101 and S3102 are optional, and one or more of these steps may be omitted or replaced in different embodiments.

FIG. 3b is a flowchart of a communication method according to an embodiment of the present disclosure. As shown in FIG. 3b, the communication method involved in the embodiment of the present disclosure is executed by the terminal 101. The method includes the following steps.

In S3201, a first request is sent to the AMF network element of the core network device.

The optional implementation of step S3201 can refer to the optional implementation of step S201 in FIG. 2, as well as other related parts in the embodiment involved in FIG. 2, which will not be repeated here.

In S3202, a second request sent by the first network element of the core network device is received through the AMF network element.

The optional implementation of step S3202 can refer to the optional implementation of step S203 in FIG. 2, as well as other related parts in the embodiment involved in FIG. 2, which will not be repeated here.

In some embodiments, step S3201 is optional, and one or more of these steps may be omitted or replaced in different embodiments.

In some embodiments, step S3202 is optional, and one or more of these steps may be omitted or replaced in different embodiments.

FIG. 4a is a flowchart of a communication method according to an embodiment of the present disclosure. As shown in FIG. 4a, the communication method involved in the embodiment of the present disclosure is performed by a core network device 102. The method includes the following steps.

In S4101, a first request is received.

The optional implementation of step S4101 can refer to the optional implementation of step S202 in FIG. 2, as well as other related parts in the embodiment involved in FIG. 2, which will not be repeated here.

In some embodiments, the core network device 102 receives a first request sent by the terminal 101, but is not limited thereto, and may also be first information sent by other subjects.

In S4102, a second request is sent.

The optional implementation of step S4102 can refer to the optional implementation of step S203 in FIG. 2, as well as other related parts in the embodiment involved in FIG. 2, which will not be described in detail here.

In S4103, a sensing result of the sensing service is determined.

The optional implementation of step S4103 can refer to the optional implementation of step S206 in FIG. 2, as well as other related parts in the embodiment involved in FIG. 2, which will not be described in detail here.

In S4104, the sensing result is sent.

The optional implementation of step S4104 can refer to the optional implementation of step S207 in FIG. 2, as well as other related parts in the embodiment involved in FIG. 2, which will not be repeated here.

The communication method involved in the embodiment of the present disclosure may include steps S4101 to S4104. For example, step S4101 can be implemented as an independent embodiment, step S4102 can be implemented as an independent embodiment, step S4102 and step S4103 can be implemented as independent embodiments, and steps S4101, S4102 and S4103 can be implemented as independent embodiments (examples of permutations and combinations of important steps involving the invention point), but are not limited thereto.

In some embodiments, step S4101 is optional, and one or more of these steps may be omitted or replaced in different embodiments.

In some embodiments, step S4102 is optional, and one or more of these steps may be omitted or replaced in different embodiments.

In some embodiments, step S4103 is optional, and one or more of these steps may be omitted or replaced in different embodiments.

In some embodiments, step S4104 is optional, and one or more of these steps may be omitted or replaced in different embodiments.

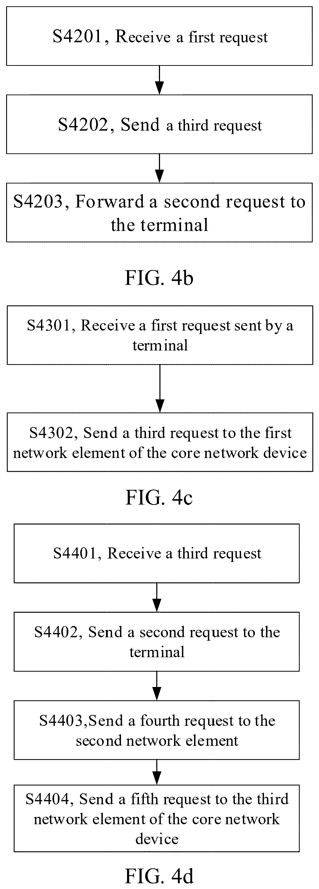

FIG. 4b is a flowchart of a communication method according to an embodiment of the present disclosure. As shown in FIG. 4b, the communication method involved in the embodiment of the present disclosure is performed by an AMF network element. The method includes the following steps.

In S4201, a first request is received.

The optional implementation of step S4201 can refer to the optional implementation of step S201 in FIG. 2, as well as other related parts in the embodiment involved in FIG. 2, which will not be repeated here.

In some embodiments, the AMF network element may receive a first request sent by the terminal.

In S4202, a third request is sent.

The optional implementation of step S4202 can refer to the optional implementation of step S202 in FIG. 2, as well as other related parts in the embodiment involved in FIG. 2, which will not be repeated here.

In some embodiments, the AMF network element may send a third request to the first network element of the core network device.

In some embodiments, the AMF network element may receive a second request sent by a first network element of a core network device.

In some embodiments, the second request is sent by the first network element in response to receiving the third request.

In some embodiments, step S4201 is optional, and one or more of these steps may be omitted or replaced in different embodiments.

In some embodiments, step S4202 is optional, and one or more of these steps may be omitted or replaced in different embodiments.

FIG. 4c is a flowchart of a communication method according to an embodiment of the present disclosure. As shown in FIG. 4c, the communication method involved in the embodiment of the present disclosure is performed by an AMF network element. The method includes the following steps.

In S4301, a first request sent by a terminal is received.

The optional implementation of step S4301 can refer to the optional implementation of step S201 in FIG. 2, as well as other related parts in the embodiment involved in FIG. 2, which will not be repeated here.

In some embodiments, the AMF network element may receive a first request sent by the terminal.

In S4302, a third request is sent to the first network element of the core network device.

The optional implementation of step S4302 can refer to the optional implementation of step S202 in FIG. 2, as well as other related parts in the embodiment involved in FIG. 2, which will not be repeated here.

In some embodiments, step S4301 is optional, and one or more of these steps may be omitted or replaced in different embodiments.

In some embodiments, step S4302 is optional, and one or more of these steps may be omitted or replaced in different embodiments.

FIG. 4d is a flowchart of a communication method according to an embodiment of the present disclosure. As shown in FIG. 4d, the communication method involved in the embodiment of the present disclosure is performed by a first network element. The method includes the following steps.

In S4401, a third request is received.

The optional implementation of step S4401 can refer to the optional implementation of step S202 in FIG. 2, as well as other related parts in the embodiment involved in FIG. 2, which will not be repeated here.

In some embodiments, the first network element may receive a third request sent by the AMF network element of the core network device.

In S4402, a second request is sent to the terminal.

The optional implementation of step S4402 can refer to the optional implementation of step S203 in FIG. 2, as well as other related parts in the embodiment involved in FIG. 2, which will not be repeated here.

In some embodiments, the first network element may send the second request to the terminal through the AMF network element.

In S4403: a fourth request is sent to the second network element.

The optional implementation of step S4403 can refer to the optional implementation of step S202 in FIG. 2, as well as other related parts in the embodiment involved in FIG. 2, which will not be repeated here.

In S4404, a fifth request is sent to the third network element of the core network device.

The optional implementation of step S4404 can refer to the optional implementation of step S206 in FIG. 2, as well as other related parts in the embodiment involved in FIG. 2, which will not be repeated here.

In some embodiments, step S4401 is optional, and one or more of these steps may be omitted or replaced in different embodiments.

In some embodiments, step S4401 and step S4402 are optional, and one or more of these steps may be omitted or replaced in different embodiments.

In some embodiments, step S4402 and step S4403 may be performed in an interchangeable order or simultaneously.

The communication method involved in the embodiments of the present disclosure may include at least one of step S4401 to step S4404. For example, step S4401 may be implemented as an independent embodiment, step S4402 may be implemented as an independent embodiment, step S4402 and step S4403 may be implemented as independent embodiments, and steps S4402-S4404 may be implemented as independent embodiments, but are not limited thereto.

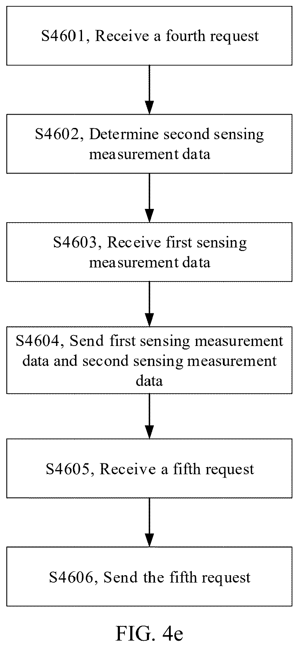

FIG. 4e is a flowchart of a communication method according to an embodiment of the present disclosure. As shown in FIG. 4e, the communication method involved in the embodiment of the present disclosure is performed by a first network element. The method includes the following steps.

In S4501, the third request sent by the AMF network element of the core network device is received.

The optional implementation of step S4501 can refer to the optional implementation of step S202 in FIG. 2, as well as other related parts in the embodiment involved in FIG. 2, which will not be repeated here.

In S4502, a second request is sent to the terminal through the AMF network element.

The optional implementation of step S4502 can refer to the optional implementation of step S202 in FIG. 2, as well as other related parts in the embodiment involved in FIG. 2, which will not be repeated here.

In some embodiments, the first network element may send the second request to the terminal through the AMF network element.

The communication method involved in the embodiment of the present disclosure may include at least one of step S4501 and step S4502. For example, step S4501 may be implemented as an independent embodiment, and step S4502 may be implemented as an independent embodiment, but is not limited thereto.

In some embodiments, step S4501 is optional, and one or more of these steps may be omitted or replaced in different embodiments.

In some embodiments, step S4502 is optional, and one or more of these steps may be omitted or replaced in different embodiments.

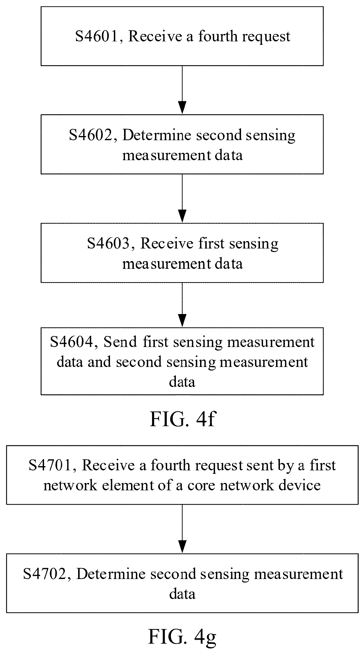

FIG. 4f is a flowchart of a communication method according to an embodiment of the present disclosure. As shown in FIG. 4f, the communication method involved in the embodiment of the present disclosure is performed by a second network element. The method includes the following steps.

In S4601, a fourth request is received.

The optional implementation of step S4601 can refer to the optional implementation of step S202 in FIG. 2, as well as other related parts in the embodiment involved in FIG. 2, which will not be repeated here.

In some embodiments, the second network element may receive a fourth request sent by the first network element of the core network device.

In S4602, second sensing measurement data is determined.

The optional implementation of step S4602 can refer to the optional implementation of step S206 in FIG. 2, as well as other related parts in the embodiment involved in FIG. 2, which will not be repeated here.

In S4603, first sensing measurement data is received.

The optional implementation of step S4603 can refer to the optional implementation of step S206 in FIG. 2, as well as other related parts in the embodiment involved in FIG. 2, which will not be repeated here.

In some embodiments, the second network element may receive first sensing measurement data sent by the terminal.

In S4604, first sensing measurement data and second sensing measurement data are sent.

The optional implementation of step S4604 can refer to the optional implementation of step S206 in FIG. 2, as well as other related parts in the embodiment involved in FIG. 2, which will not be repeated here.

In some embodiments, the second network element may send the first sensing measurement data and the second sensing measurement data to a third network element of the core network device.

In S4605, a fifth request is received.

The optional implementation of step S465 can refer to the optional implementation of step S206 in FIG. 2, as well as other related parts in the embodiment involved in FIG. 2, which will not be described in detail here.

In some embodiments, the second network element may send second information to the first network element after obtaining the first sensing measurement data and the second sensing measurement data, or may send the second information after step S4604, where the second information is used to indicate that the second network element has obtained the first sensing measurement data and the second sensing measurement data.

In S4606, the fifth request is sent.

The optional implementation of step S4606 can refer to the optional implementation of step S206 in FIG. 2, as well as other related parts in the embodiment involved in FIG. 2, which will not be repeated here.

In some embodiments, the second network element may send a fifth request to the third network element.

In some embodiments, step S4601 is optional, and one or more of these steps may be omitted or replaced in different embodiments.

In some embodiments, step S4601 and step S4602 are optional, and one or more of these steps may be omitted or replaced in different embodiments.

In some embodiments, step S4602 and step S4603 may be performed in an interchangeable order or simultaneously.

The communication method involved in the embodiments of the present disclosure may include at least one of steps S4601 to S4606. For example, step S4601 may be implemented as an independent embodiment, step S4602 may be implemented as an independent embodiment, step S4602 and step S4603 may be implemented as independent embodiments, and step S4604 may be implemented as an independent embodiment, but is not limited thereto.

FIG. 4g is a flowchart of a communication method according to an embodiment of the present disclosure. As shown in FIG. 4g, the communication method involved in the embodiment of the present disclosure is performed by a second network element. The method includes the following steps.

In S4701, a fourth request sent by a first network element of a core network device is received.

The optional implementation of step S4701 can refer to the optional implementation of step S202 in FIG. 2, as well as other related parts in the embodiment involved in FIG. 2, which will not be repeated here.

In S4702, second sensing measurement data is determined.

The optional implementation of step S4602 can refer to the optional implementation of step S206 in FIG. 2, as well as other related parts in the embodiment involved in FIG. 2, which will not be repeated here.

The communication method involved in the embodiment of the present disclosure may include at least one of step S4701 and step S4702. For example, step S4701 may be implemented as an independent embodiment, and step S4702 may be implemented as an independent embodiment.

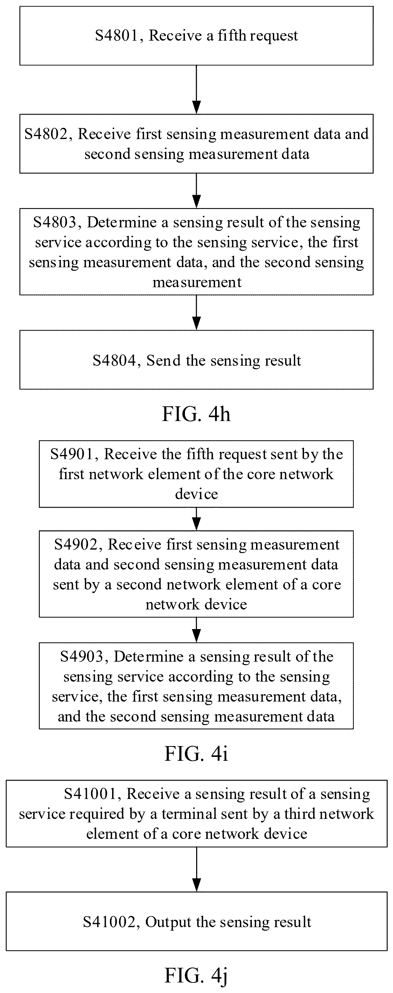

FIG. 4h is a flowchart of a communication method according to an embodiment of the present disclosure. As shown in FIG. 4h, the communication method involved in the embodiment of the present disclosure is performed by a third network element. The method includes the following steps.

In S4801, a fifth request is received.

The optional implementation of step S4801 can refer to the optional implementation of step S206 in FIG. 2, as well as other related parts in the embodiment involved in FIG. 2, which will not be repeated here.

In some embodiments, the third network element may receive a fifth request sent by the first network element of the core network device.

In S4802, first sensing measurement data and second sensing measurement data are received.

The optional implementation of step S4802 can refer to the optional implementation of step S206 in FIG. 2, as well as other related parts in the embodiment involved in FIG. 2, which will not be repeated here.

In some embodiments, the third network element may receive the first sensing measurement data and the second sensing measurement data sent by the second network element of the core network device.

In S4803, a sensing result of the sensing service is determined according to the sensing service, the first sensing measurement data, and the second sensing measurement data.

The optional implementation of step S4803 can refer to the optional implementation of step S206 in FIG. 2, as well as other related parts in the embodiment involved in FIG. 2, which will not be repeated here.

In S4804, the sensing result is sent.

The optional implementation of step S4804 can refer to the optional implementation of step S207 in FIG. 2, as well as other related parts in the embodiment involved in FIG. 2, which will not be repeated here.

For example, a first sensing result related to the terminal side is sent to the terminal.

A second sensing result related to the core network device side is sent to the fourth network element of the core network device.

In some embodiments, step S4801 is optional, and one or more of these steps may be omitted or replaced in different embodiments.

In some embodiments, step S4802 is optional, and one or more of these steps may be omitted or replaced in different embodiments.

In some embodiments, step S4801 and step S4802 may be performed in an interchangeable order or simultaneously.

The communication method involved in the embodiments of the present disclosure may include at least one of steps S4801 to S4804. For example, step S4801 may be implemented as an independent embodiment, step S4802 may be implemented as an independent embodiment, step S4802 and step S4803 may be implemented as independent embodiments, and step S4804 may be implemented as an independent embodiment, but is not limited thereto.

FIG. 4i is a flowchart of a communication method according to an embodiment of the present disclosure. As shown in FIG. 4i, the communication method involved in the embodiment of the present disclosure is performed by a third network element. The method includes the following steps.

In S4901, the fifth request sent by the first network element of the core network device is received.

The optional implementation of step S4901 can refer to the optional implementation of step S206 in FIG. 2, as well as other related parts in the embodiment involved in FIG. 2, which will not be repeated here.

In S4902, first sensing measurement data and second sensing measurement data sent by a second network element of a core network device are received.

The optional implementation of step S4902 can refer to the optional implementation of step S206 in FIG. 2, as well as other related parts in the embodiment involved in FIG. 2, which will not be repeated here.

In S4903, a sensing result of the sensing service is determined according to the sensing service, the first sensing measurement data, and the second sensing measurement data.

The optional implementation of step S4903 can refer to the optional implementation of step S206 in FIG. 2, as well as other related parts in the embodiment involved in FIG. 2, which will not be repeated here.

The communication method involved in the embodiment of the present disclosure may include at least one of step S4901 to step S4903. For example, step S4901 may be implemented as an independent embodiment, step S4903 may be implemented as an independent embodiment, and step S4902 and step S4903 may be implemented as independent embodiments, but are not limited thereto.

FIG. 4j is a flowchart of a communication method according to an embodiment of the present disclosure. As shown in FIG. 4j, the communication method involved in the embodiment of the present disclosure is performed by a fourth network element. The method includes the following steps.

In S41001, a sensing result of a sensing service required by a terminal sent by a third network element of a core network device is received.

In S41002, the sensing result is output.

The optional implementation of steps S41001 and S41002 can refer to the optional implementation of step S206 in FIG. 2, as well as other related parts in the embodiment involved in FIG. 2, which will not be repeated here.

The communication method involved in the embodiment of the present disclosure may include at least one of step S41001 and step S41002. For example, step S41001 may be implemented as an independent embodiment, and step S41002 may be implemented as an independent embodiment, but is not limited thereto.

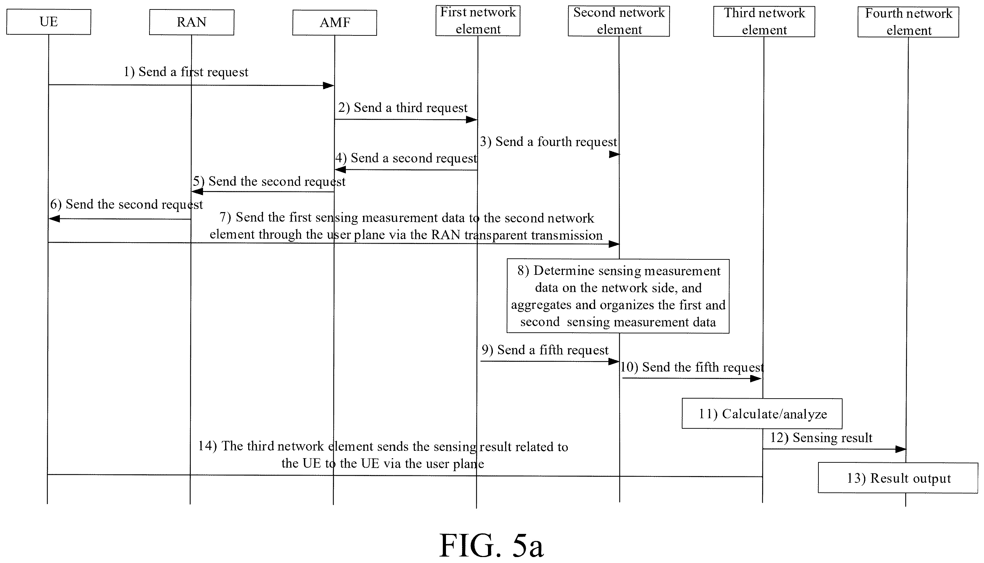

FIG. 5a is an interactive schematic diagram of a communication method according to an embodiment of the present disclosure. As shown in the figure, the method includes the following steps.
1) The UE sends a first request to the AMF network element, including SUPI, DNN, user location information, access type and other information, to start the sensing service. The first request is used to establish the sensing service.
2) The AMF network element sends a third request to the first network element to create an association between the UE and the first network element, which includes the SUPI of the UE and other parameters such as access type, GPSI, user location information, permanent device identifier, etc. By creating the association, the first network element is allowed to send the second request to the UE through the AMF network element.
3) The first network element performs task allocation and sends the fourth request to the second network element, so as to apply to the second network element for the sensing measurement data on the core network side.
4) The first network element sends a second request to the AMF network element, where the second request is used to instruct the UE to determine first sensing measurement data, that is, the sensing measurement data on the terminal side that the UE needs to provide.
5) The AMF network element sends a second request to the (R)AN.
6) (R)AN forwards the second request to the UE.
7) The UE sends the first sensing measurement data to the second network element through the user plane via the RAN transparent transmission.
8) The second network element determines second sensing measurement data, and aggregates and organizes the second sensing measurement data and the first sensing measurement data from the UE side.
9) After the second network element completes aggregating the sensing measurement data, the first network element sends a fifth request to the second network element.
10) The second network element sends the fifth request to the third network element.
11) The third network element calculates and analyzes the sensing measurement data and outputs the sensing result, which may be in the form of a report.
12) The third network element requests the fourth network element to output the result.
13) The fourth network element outputs the result, which can be in the form of outputting the calculation result on the screen, or executing a specific action, such as adjusting the light, adjusting the temperature, and opening and closing the valve.
14) The third network element sends the sensing result related to the UE to the UE via the user plane, including the calculation and analysis of the UE's sensing information. The UE receives the sensing result and ends the service process.

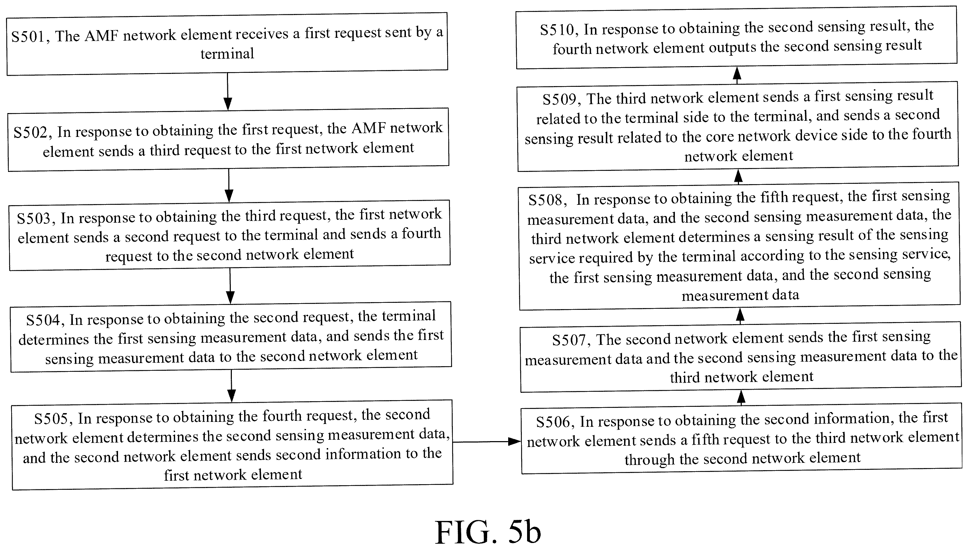

FIG. 5b is a flowchart of a communication method according to an embodiment of the present disclosure. As shown in the figure, the method includes the following steps.

In S501, the AMF network element receives a first request sent by a terminal, the first request is used to request a core network device to provide a sensing service to the terminal, the first request includes first information, and the first information is used to indicate the sensing service required by the terminal.

In S502, in response to obtaining the first request, the AMF network element sends a third request to the first network element, where the third request is used to request the first network element to communicate with the terminal through the AMF network element, and the third request includes the first information.

In S503, in response to obtaining the third request, the first network element sends a second request to the terminal and sends a fourth request to the second network element, the second request is used to instruct the terminal to determine first sensing measurement data, the first sensing measurement data is sensing measurement data related to the sensing service on the terminal side, the first sensing measurement data is determined and sent; the fourth request is used to instruct the second network element to determine second sensing measurement data, the second sensing measurement data is sensing measurement data related to the sensing service on the core network device side.

In S504, in response to obtaining the second request, the terminal determines the first sensing measurement data, and sends the first sensing measurement data to the second network element.

In S505, in response to obtaining the fourth request, the second network element determines the second sensing measurement data, and the second network element sends second information to the first network element, where the second information is used to indicate that the first sensing measurement data has been received and the second sensing measurement data has been determined.

In S506, in response to obtaining the second information, the first network element sends a fifth request to the third network element through the second network element, where the fifth request includes the first information, the first information is used to indicate the sensing service required by the terminal, and the fifth request is used to instruct the third network element of the core network device to determine the sensing result of the sensing service.

In S507, the second network element sends the first sensing measurement data and the second sensing measurement data to the third network element.

In S508, in response to obtaining the fifth request, the first sensing measurement data, and the second sensing measurement data, the third network element determines a sensing result of the sensing service required by the terminal according to the sensing service, the first sensing measurement data, and the second sensing measurement data.

In S509, the third network element sends a first sensing result related to the terminal side to the terminal, and sends a second sensing result related to the core network device side to the fourth network element.

In S510, in response to obtaining the second sensing result, the fourth network element outputs the second sensing result.

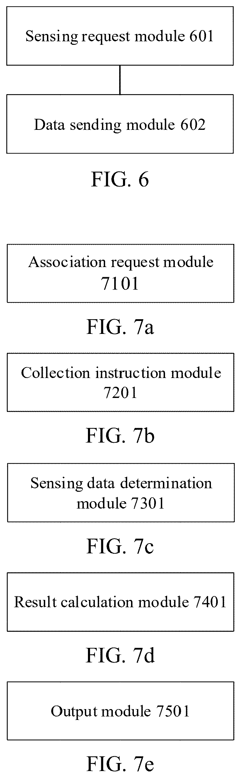

The embodiment of the present disclosure provides a terminal, as shown in FIG. 6, the terminal may include: a sensing request module 601 and a data sending module 602, where:
the sensing request module 601 is configured to send a first request, where the first request is used to request a core network device to provide a sensing service to a terminal, and the first request includes first information, where the first information is used to indicate the sensing service required by the terminal;
the data sending module 602 is configured to, in response to obtaining a second request, the second request being used to instruct the terminal to determine first sensing measurement data, and the first sensing measurement data being sensing measurement data related to the sensing service on the terminal side, determine and send the first sensing measurement data.

The embodiment of the present disclosure provides an AMF network element, as shown in FIG. 7a, the AMF network element may include an association request module 7101, where:
the association request module 7101 is configured to send a third request to a first network element of a core network device in response to obtaining the first request;
where the first request is used to request the core network device to provide a sensing service to the terminal, the first request includes first information, and the first information is used to indicate the sensing service required by the terminal;
the third request is used to request the first network element to communicate with the terminal through the AMF network element, and the third request includes the first information;
the first network element is used to indicate first sensing measurement data and second sensing measurement data required to provide the sensing service, the first sensing measurement data is sensing measurement data related to the sensing service on the terminal side, and the second sensing measurement data is sensing measurement data related to the sensing service on the core network device side.

The embodiment of the present disclosure provides a first network element, as shown in FIG. 7b, the first network element may include a collection instruction module 7201, where:
the collection instruction module 7201 is configured to send a second request to the terminal and send a fourth request to the second network element in response to obtaining the third request;
the third request is used to request the first network element to communicate with the terminal through the AMF network element, the third request includes first information, and the first information is used to indicate the sensing service required by the terminal;
the second request is used to instruct the terminal to determine first sensing measurement data, where the first sensing measurement data is sensing measurement data related to the sensing service on the terminal side.

The fourth request is used to instruct the second network element to determine the second sensing measurement data.

The embodiment of the present disclosure provides a second network element, as shown in FIG. 7c, the second network element may include a sensing data determination module 7301, where:
the sensing data determination module 7301 is configured to, in response to obtaining a fourth request, the fourth request being used to instruct determination of second sensing measurement data, and the second sensing measurement data being sensing measurement data related to a sensing service required by a terminal on a core network device side, determine the second sensing measurement data;
the fourth request is sent by the first network element in response to obtaining the third request, the third request is used to request the first network element to communicate with the terminal through the AMF network element of the core network device, and the third request includes first information, and the first information is used to indicate the sensing service;
the first network element is used to indicate first sensing measurement data and second sensing measurement data required for providing a sensing service, where the first sensing measurement data is sensing measurement data on the terminal side related to the sensing service required by the terminal.

The embodiment of the present disclosure provides a third network element, as shown in FIG. 7d, the third network element may include a result calculation module 7401, where:
the result calculation module 7401 is configured to, in response to obtaining the fifth request, the first sensing measurement data, and the second sensing measurement data, determine a sensing result of the sensing service required by the terminal according to the sensing service, the first sensing measurement data, and the second sensing measurement data;
the fifth request includes first information, the first information is used to indicate a sensing service required by the terminal, and the fifth request is used to indicate to determine the sensing result of the sensing service;
the first sensing measurement data is the sensing measurement data related to the sensing service on the terminal side; the second sensing measurement data is the sensing measurement data related to the sensing service on the core network device side.

The embodiment of the present disclosure provides a fourth network element, as shown in FIG. 7e, the fourth network element may include: an output module 7501, where:
the output module 7501 is configured to output the sensing result in response to obtaining the sensing result of the sensing service required by a terminal;
where the sensing result is determined by a third network element in the core network device in response to obtaining the fifth request, the first sensing measurement data, and the second sensing measurement data;
the fifth request includes first information, where the first information is used to indicate a sensing service, and the fifth request is used to indicate to determine the sensing result of the sensing service;
the first sensing measurement data is the sensing measurement data related to the sensing service on the terminal side; the second sensing measurement data is the sensing measurement data related to the sensing service on the core network device side.

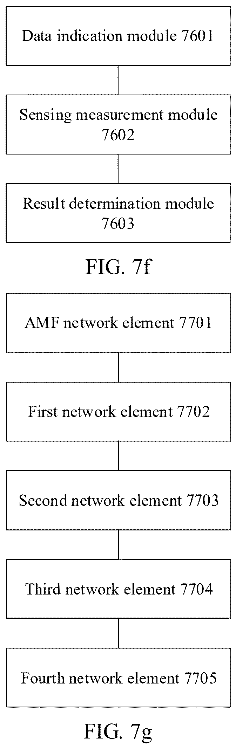

The embodiment of the present disclosure provides a core network device, as shown in FIG. 7f, the core network device may include: a data indication module 7601, a sensing measurement module 7602 and a result determination module 7603, where:
the data indication module 7601 is configured to send a second request in response to obtaining a first request, the first request is used to request the core network device to provide a sensing service to the terminal, the first request includes first information, the first information is used to indicate the sensing service required by the terminal, and the second request is used to instruct the terminal to determine the first sensing measurement data, where the first sensing measurement data is sensing measurement data related to the sensing service on the terminal side;
the sensing measurement module 7602 is configured to determine second sensing measurement data, where the second sensing measurement data is sensing measurement data related to the sensing service on the core network device side;
the result determination module 7603 is configured to determine the sensing result of the sensing service according to the first sensing measurement data and the second sensing measurement data in response to obtaining the first sensing measurement data.

The embodiment of the present disclosure provides a communication system, as shown in FIG. 7g, the communication system may include: an AMF network element 7701, a first network element 7702, a second network element 7703, a third network element 7704 and a fourth network element 7705.

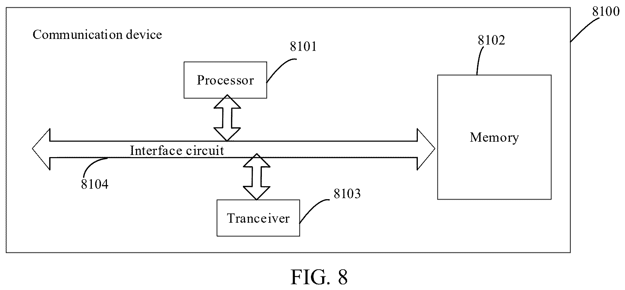

FIG. 8 is a schematic diagram of a structure of a communication device 8100 proposed in an embodiment of the present disclosure. The communication device 8100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 8100 may be used to implement the method described in the above method embodiments, and the details may refer to the description in the above method embodiments.

As shown in FIG. 8, the communication device 8100 includes one or more processors 8101. The processor 8101 may be a general-purpose processor or a dedicated processor, for example, a baseband processor or a central processing unit. The baseband processor may be used to process the communication protocol and the communication data, and the central processing unit may be used to control the communication apparatus (such as a base station, a baseband chip, a terminal device, a terminal device chip, a DU or a CU, etc.), execute a program, and process the data of the program. The processor 8101 is used to call instructions so that the communication device 8100 executes any of the above methods.

In some embodiments, the communication device 8100 further includes one or more memories 8102 for storing instructions. Optionally, all or part of the memory 8102 may also be outside the communication device 8100.

In some embodiments, the communication device 8100 further includes one or more transceivers 8103. When the communication device 8100 includes one or more transceivers 8103, the communication steps such as sending and receiving in the above methods are executed by the transceiver 8103, and the other steps are executed by the processor 8101.

In some embodiments, the transceiver may include a receiver and a transmitter, and the receiver and the transmitter may be separate or integrated. Optionally, the terms such as transceiver, transceiver unit, transceiver machine, transceiver circuit, etc. may be replaced with each other, the terms such as transmitter, transmission unit, transmitter machine, transmission circuit, etc. may be replaced with each other, and the terms such as receiver, receiving unit, receiver machine, receiving circuit, etc. may be replaced with each other.

Optionally, the communication device 8100 further includes one or more interface circuits 8104, which are connected to the memory 8102. The interface circuit 8104 can be used to receive signals from the memory 8102 or other apparatuses, and can be used to send signals to the memory 8102 or other apparatuses. For example, the interface circuit 8104 can read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited by FIG. 8. The communication device may be an independent device or may be part of a relatively large device. For example, the communication device may be:
1) an independent integrated circuit IC, or chip, or chip system or subsystem;
2) a set of one or more ICs, optionally, the IC set may also include a storage component for storing data and programs;
3) an ASIC, such as a modem;
4) a module that can be embedded in other devices;
5) a receiver, a terminal device, a smart terminal device, a cellular phone, a wireless device, a handheld device, a mobile unit, a vehicle-mounted device, a network device, a cloud device, an artificial intelligence device, etc.;
6) others, etc.

## Claims

1. A communication method, performed by a terminal, and the method comprising:
sending a first request, wherein the first request is used to request a core network device to provide a sensing service to the terminal, the first request comprises first information, and the first information is used to indicate a sensing service required by the terminal; and
in response to obtaining a second request, the second request being used to instruct the terminal to determine first sensing measurement data, and the first sensing measurement data being sensing measurement data related to a sensing service on a terminal side, determining and sending the first sensing measurement data.

2. The method according to claim 1, further comprising:
receiving a sensing result of the sensing service, wherein the sensing result is determined based on the first sensing measurement data and second sensing measurement data;
wherein the second sensing measurement data is determined by the core network device, and the second sensing measurement data is sensing measurement data related to a sensing service on a core network device side.

3. The method according to claim 1 or 2, wherein the sensing result comprises at least one of a first sensing result related to the terminal side and a second sensing result related to the core network device side.

4. A communication method, performed by a core network device, and the method comprising:
in response to obtaining a first request, the first request being used to request the core network device to provide a sensing service to a terminal, the first request comprising first information, and the first information being used to indicate a sensing service required by the terminal, sending a second request, wherein the second request is used to instruct the terminal to determine first sensing measurement data, and the first sensing measurement data is sensing measurement data related to a sensing service on a terminal side;
determining second sensing measurement data, wherein the second sensing measurement data is sensing measurement data related to a sensing service on a core network device side; and
in response to obtaining the first sensing measurement data, determining a sensing result of the sensing service according to the first sensing measurement data and the second sensing measurement data.

5. The method according to claim 4, further comprising:
sending the sensing result of the sensing service.

6. The method according to claim 4 or 5, wherein the sensing result comprises at least one of a first sensing result related to the terminal side and a second sensing result related to the core network device side.

7. A communication method, performed by an AMF network element, and the method comprising:
in response to obtaining a first request, sending a third request to a first network element of a core network device;
wherein the first request is used to request the core network device to provide a sensing service to a terminal, the first request comprises first information, and the first information is used to indicate a sensing service required by the terminal;
the third request is used to request the first network element to communicate with the terminal through the AMF network element, and the third request comprises the first information;
the first network element is used to indicate first sensing measurement data and second sensing measurement data required for providing the sensing service, the first sensing measurement data is sensing measurement data related to a sensing service on a terminal side, and the second sensing measurement data is sensing measurement data related to a sensing service on a core network device side.

8. The method according to claim 7, comprising:
in response to obtaining a second request, sending the second request to the terminal;
wherein the second request is used to instruct the terminal to determine the first sensing measurement data.

9. A communication method, performed by a first network element of a core network device, and the method comprising:
in response to obtaining a third request, sending a second request to a terminal, and sending a fourth request to a second network element;
wherein the third request is used to request the first network element to communicate with the terminal through an AMF network element, the third request comprises first information, and the first information is used to indicate a sensing service required by the terminal;
the second request is used to instruct the terminal to determine first sensing measurement data, and the first sensing measurement data is sensing measurement data related to a sensing service on a terminal side;
the fourth request is used to instruct the second network element to determine second sensing measurement data, and the second sensing measurement data is sensing measurement data related to a sensing service on a core network device side.

10. The method according to claim 9, further comprising:
in response to the second network element obtaining the first sensing measurement data and the second sensing measurement data, sending a fifth request to a third network element of the core network device;
wherein the fifth request comprises the first information, and the fifth request is used to instruct the third network element to determine a sensing result of the sensing service.

11. The method according to claim 10, wherein the sensing result comprises at least one of a first sensing result related to a terminal side and a second sensing result related to a core network device side.

12. A communication method, performed by a second network element of a core network device, and the method comprising:
in response to obtaining a fourth request, the fourth request being used to instruct to determine second sensing measurement data, and the second sensing measurement data being sensing measurement data related to a sensing service required by a terminal on a core network device side, determining the second sensing measurement data;
wherein the fourth request is sent by a first network element in response to obtaining a third request, the third request is used to request a first network element to communicate with the terminal through an AMF network element of the core network device, the third request comprises first information, and the first information is used to indicate the sensing service;
the first network element is used to indicate first sensing measurement data and the second sensing measurement data required for providing the sensing service, and the first sensing measurement data is sensing measurement data related to a sensing service required by the terminal on a terminal side.

13. The method according to claim 12, further comprising:
receiving first sensing measurement data, wherein the first sensing measurement data is sensing measurement data related to a sensing service on the terminal side; and
sending the first sensing measurement data and the second sensing measurement data to a third network element of the core network device;
wherein the third network element is used to determine a sensing result of the sensing service according to the first sensing measurement data and the second sensing measurement data.

14. The method according to claim 13, further comprising:
sending second information to the first network element, wherein the second information is used to indicate that the first sensing measurement data has been received and the second sensing measurement data has been determined; and
in response to obtaining a fifth request, sending the fifth request to the third network element;
wherein the fifth request comprises first information, the first information is used to indicate the sensing service required by the terminal, and the fifth request is used to instruct the third network element of the core network device to determine the sensing result of the sensing service.

15. The method according to claim 13 or 14, wherein the sensing result comprises at least one of a first sensing result related to the terminal side and a second sensing result related to the core network device side.

16. A communication method, performed by a third network element in a core network device, and the method comprising:
in response to obtaining a fifth request, first sensing measurement data, and second sensing measurement data, determining a sensing result of a sensing service required by a terminal according to the sensing service, the first sensing measurement data, and the second sensing measurement data;
wherein the fifth request comprises first information, the first information is used to indicate the sensing service required by the terminal, and the fifth request is used to instruct to determine the sensing result of the sensing service;
the first sensing measurement data is sensing measurement data related to a sensing service on a terminal side; the second sensing measurement data is sensing measurement data related to a sensing service on a core network device side.

17. The method according to claim 16, wherein the sensing result comprises at least one of a first sensing result related to the terminal side and a second sensing result related to the core network device side.

18. The method according to claim 16 or 17, further comprising:
sending the sensing result to at least one of the terminal and a fourth network element of the core network device;
wherein the fourth network element is used to output the sensing result.

19. A communication method, performed by a fourth network element in a core network device, and the method comprising:
in response to obtaining a sensing result of a sensing service required by a terminal, outputting the sensing result;
wherein the sensing result is determined by a third network element in the core network device in response to obtaining a fifth request, first sensing measurement data, and second sensing measurement data;
the fifth request comprises first information, the first information is used to indicate a sensing service, and the fifth request is used to instruct to determine the sensing result of the sensing service;
the first sensing measurement data is sensing measurement data related to a sensing service on a terminal side; and the second sensing measurement data is sensing measurement data related to a sensing service on a core network device side.

20. The method according to claim 19, wherein the sensing result comprises at least one of a first sensing result related to the terminal side and a second sensing result related to the core network device side.

21. A communication method, comprising:
an AMF network element receiving a first request sent by a terminal, wherein the first request is used to request a core network device to provide a sensing service to the terminal, the first request comprises first information, and the first information is used to indicate a sensing service required by the terminal;
in response to obtaining the first request, the AMF network element sending a third request to a first network element, wherein the third request is used to request the first network element to communicate with the terminal through the AMF network element, and the third request comprises the first information;
in response to obtaining the third request, the first network element sending a second request to the terminal and sending a fourth request to a second network element, wherein the second request is used to instruct the terminal to determine first sensing measurement data, the first sensing measurement data being sensing measurement data related to a sensing service on a terminal side, and determine and send the first sensing measurement data; the fourth request being used to instruct the second network element to determine second sensing measurement data, and the second sensing measurement data being sensing measurement data related to the sensing service on a core network device side;
in response to obtaining the second request, the terminal determining the first sensing measurement data, and sending the first sensing measurement data to the second network element;
in response to obtaining the fourth request, the second network element determining the second sensing measurement data, and the second network element sending second information to the first network element, wherein the second information is used to indicate that the first sensing measurement data has been received and the second sensing measurement data has been determined;
in response to obtaining the second information, the first network element sending a fifth request to the third network element through the second network element, wherein the fifth request comprises the first information, the first information is used to indicate the sensing service required by the terminal, and the fifth request is used to instruct the third network element of the core network device to determine the sensing result of the sensing service;
the second network element sending the first sensing measurement data and the second sensing measurement data to the third network element;
in response to obtaining the fifth request, the first sensing measurement data, and the second sensing measurement data, the third network element determining a sensing result of the sensing service required by the terminal according to the sensing service, the first sensing measurement data, and the second sensing measurement data;
the third network element sending a first sensing result related to the terminal side to the terminal, and sending a second sensing result related to the core network device side to the fourth network element; and
in response to obtaining the second sensing result, the fourth network element outputting the second sensing result.

22. A communication system, wherein the system is used to perform the method according to any one of claims 4-21.

23. A communication system, comprising following network elements:
an AMF network element that performs the communication method according to any one of claims 6 to 8;
a first network element that performs the communication method according to any one of claims 9 to 11;
a second network element that performs the communication method according to any one of claims 12 to 15;
a third network element that performs the communication method according to any one of claims 16 to 18;
a fourth network element that performs the communication method described in any one of claims 19-20.

24. A terminal, comprising:
a sensing request module, configured to send a first request, wherein the first request is used to request a core network device to provide a sensing service to the terminal, the first request comprises first information, and the first information is used to indicate a sensing service required by the terminal; and
a data sending module, configured to, in response to obtaining a second request, the second request being used to instruct the terminal to determine first sensing measurement data, and the first sensing measurement data being sensing measurement data related to a sensing service on a terminal side, determine and send the first sensing measurement data.

25. An AMF network element, comprising:
an association request module, configured to, in response to obtaining a first request, send a third request to a first network element of a core network device;
wherein the first request is used to request the core network device to provide a sensing service to a terminal, the first request comprises first information, and the first information is used to indicate a sensing service required by the terminal;
the third request is used to request the first network element to communicate with the terminal through the AMF network element, and the third request comprises the first information;
the first network element is used to indicate first sensing measurement data and second sensing measurement data required for providing the sensing service, the first sensing measurement data is sensing measurement data related to a sensing service on a terminal side, and the second sensing measurement data is sensing measurement data related to a sensing service on a core network device side.

26. A first network element, comprising:
a collection instruction module, configured to, in response to obtaining a third request, send a second request to a terminal and send a fourth request to a second network element;
wherein the third request is used to request the first network element to communicate with the terminal through an AMF network element, the third request comprises first information, and the first information is used to indicate a sensing service required by the terminal;
the second request is used to instruct the terminal to determine first sensing measurement data, and the first sensing measurement data is sensing measurement data related to a sensing service on a terminal side;
the fourth request is used to instruct the second network element to determine second sensing measurement data, and the second sensing measurement data is sensing measurement data related to a sensing service on a core network device side.

27. A second network element, comprising:
a sensing data determination module, configured to, in response to obtaining a fourth request, the fourth request being used to instruct to determine second sensing measurement data, and the second sensing measurement data being sensing measurement data related to a sensing service required by a terminal on a core network device side, determine the second sensing measurement data;
wherein the fourth request is sent by a first network element in response to obtaining a third request, the third request is used to request the first network element to communicate with the terminal through an AMF network element of the core network device, the third request comprises first information, and the first information is used to indicate the sensing service;
the first network element is used to indicate first sensing measurement data and the second sensing measurement data required for providing the sensing service, and the first sensing measurement data is sensing measurement data related to a sensing service required by the terminal on a terminal side.

28. A third network element, comprising:
a result calculation module, configured to, in response to obtaining a fifth request, first sensing measurement data and second sensing measurement data, determine a sensing result of a sensing service required by a terminal according to the sensing service, the first sensing measurement data and the second sensing measurement data;
wherein the fifth request comprises first information, the first information is used to indicate the sensing service required by the terminal, and the fifth request is used to instruct to determine the sensing result of the sensing service;
the first sensing measurement data is sensing measurement data related to a sensing service on a terminal side; the second sensing measurement data is sensing measurement data related to a sensing service on a core network device side.

29. A fourth network element, comprising:
an output module, configured to, in response to obtaining a sensing result of a sensing service required by a terminal, output the sensing result;
wherein the sensing result is determined by a third network element in a core network device in response to obtaining a fifth request, first sensing measurement data, and second sensing measurement data;
the fifth request comprises first information, the first information is used to indicate the sensing service, and the fifth request is used to instruct to determine the sensing result of the sensing service;
the first sensing measurement data is sensing measurement data related to a sensing service on a terminal side; the second sensing measurement data is sensing measurement data related to a sensing service on a core network device side.

30. A core network device, comprising:
a data indication module, configured to, in response to obtaining a first request, the first request being used to request a core network device to provide a sensing service to a terminal, the first request comprising first information, and the first information being used to indicate a sensing service required by the terminal, send a second request, wherein the second request is used to instruct the terminal to determine first sensing measurement data, and the first sensing measurement data is sensing measurement data related to a sensing service on a terminal side;
a sensing measurement module, configured to determine second sensing measurement data, wherein the second sensing measurement data is sensing measurement data related to a sensing service on a core network device side; and
a result determination module, configured to, in response to obtaining the first sensing measurement data, determine a sensing result of the sensing service according to the first sensing measurement data and the second sensing measurement data.

31. A storage medium having instructions stored thereon, wherein when the instructions are executed on a communication device, the communication device performs the communication method according to any one of claims 1-3, 4-6, 7-8, 9-11, 12-15, 16-18, and 19-20.
